(19) Europäisches Patentamt
European Patent Office
Office européen des brevets

(11) EP 1 475 429 A1

(12) EUROPEAN PATENT APPLICATION

(43) Date of publication:
**10.11.2004 Bulletin 2004/46**

(51) Int Cl.[7]: **C10J 3/00**, C10J 3/58, H01M 8/06

(21) Application number: **04014396.8**

(22) Date of filing: **22.05.2000**

(84) Designated Contracting States:
**AT BE CH CY DE DK ES FI FR GB GR IE IT LI LU MC NL PT SE**
Designated Extension States:
**AL LT LV MK**

(30) Priority: **21.05.1999 JP 14251399**

(62) Document number(s) of the earlier application(s) in accordance with Art. 76 EPC:
**00927841.7 / 1 194 508**

(71) Applicant: **EBARA CORPORATION**
**Ohta-ku, Tokyo (JP)**

(72) Inventors:
- **Fujimora, Hiroyuki c/o Ebara Corporation Tokyo 144-8510 (JP)**
- **Oshita, Takahoro c/o Ebara Corporation Tokyo 144-8510 (JP)**
- **Miyoshi, Norihisa c/o Ebara Corporation Tokyo 144-8510 (JP)**
- **Naruse, Katsutoshi c/o Ebara Corporation Tokyo 144-8510 (JP)**
- **Kinoshita, Kazuo c/o Ebara Corporation Tokyo 144-8510 (JP)**
- **Su, Quingquan c/o Ebara Corporation Tokyo 144-8510 (JP)**

(74) Representative: **Wagner, Karl H., Dipl.-Ing.**
**WAGNER & GEYER**
**Patentanwälte**
**Gewürzmühlstrasse 5**
**80538 München (DE)**

Remarks:
This application was filed on 18 - 06 - 2004 as a divisional application to the application mentioned under INID code 62.

# (54) Electric power generating system by gasification

(57) An electric generating system by gasification generates fuel gas from material such as organic wastes and generates electricity by utilizing fuel gas in a fuel cell. The electric generating system comprises a gasification process (1, 2) for gasifying the material to produce gas, a gas purifying process for purifying the gas produced in the gasification process, a gas pressurizing process as a part of the gas purifying process for pressurizing the produced gas, and a hydrogen purifying process as a part of the gas purifying process for purifying hydrogen by hydrogen absorbing alloy.

EP 1 475 429 A1

## Description

### Technical Field

The present invention relates to an electric generating system by gasification, and more particularly to a technology, for recovering chemical energy of wastes or combustibles such as coal at a high efficiency, in which various wastes or combustibles are treated to reduce their volume, without combusting the wastes or the combustibles such as coal completely or incinerating the wastes or the combustibles such as coal, by a step such as pyrolysis, partial combustion or gasification reaction for thereby generating heat and utilizing the generated heat effectively, and producing gas having a high utility value. As a unit of pressure, "Bar" is used in the specification, and is not absolute pressure but is gauge pressure.

### Background Art

In recent years, in case of treating combustible wastes, since simple incineration treatment of the wastes generates dioxin, it is difficult to treat the wastes by incineration in a small-scale facility which can treat the amount of 100 ton per day or less. Formation of refuse-derived fuel (RDF) and treatment of the RDF are considered to be a substitute for incineration treatment. However, in the case where the RDF is treated by incineration in a small-scale facility, the problem of generating dioxin cannot be basically solved. Therefore, in a small self-governing body where there is no large-scale incineration facility therein or in the near cities, it is pointed out that the formation of RDF will not necessarily be an effective intermediate treatment system.

Therefore, recently, a new waste treatment method which is a self-completion type of treatment without incinerating wastes, can obtain energy under harmless condition and is suitable for environmental protection is highly expected. One of the promising systems is such a system that electricity and thermal energy can be obtained by an electrochemical reaction without incinerating wastes. If a technology for generating electricity by treating combustible wastes without incinerating the wastes is put to practical use, then a waste treatment facility having no stack is realized, and such technology greatly contributes to waste treatment administration. Further, a technology for effectively recovering energy from low-grade fuel such as wastes at a high efficiency is applicable to low-grade fuel such as brown coal, and greatly contributes to improvement of energy circumstances in the world.

As a method for generating electricity by treating combustible wastes without incinerating the wastes, a method for generating electricity by gasifying the wastes to generate gas and supplying the generated gas to a fuel cell has a good prospect. Now, a system for producing fuel gas such as hydrogen or methane from solid material such as coal has been technically almost perfected, and such system is commercially operated. However, the system which is currently put to practical use employs combustibles, such as coal, having a relatively high calorific value per unit weight, e.g., 25,200 kJ/kg (6,000 kcal/kg) or more. Thus, such system is not applicable to combustibles, such as organic wastes including general wastes, having a low calorific value per unit weight, e.g. , about 8,400 kJ/kg (2,000 kcal/kg). This is because in the system which is currently put to practical use, combustibles are gasified at a temperature of 1,300°C or higher, almost all of energy of wastes having a low calorific value are required to be converted to thermal energy to obtain a high temperature of 1,300°C or higher, and an extremely small amount of utilizable chemical energy remains in a produced gas as a final product.

Next, a conventional energy recovery process by pyrolysis and gasification will be described below with reference to FIG. 16.

FIG. 16 is a basic flow diagram of a conventional energy recovery process by pyrolysis and gasification. Material "a" as organic wastes such as plastic wastes, waste wood, waste papers, or garbage, or combustibles such as coal is supplied to a low-temperature gasification process 1, and is pyrolyzed at a relatively low temperature of 800°C or lower to generate gas, tar and char in the low-temperature gasification process 1. At the same time, among inorganic substances such as metals or rubble in the material "a", a relatively large inorganic substance is separated from organic substances and discharged from a furnace as incombustibles 12. This separating function of organic substances and incombustibles is very important to utilize effectively the incombustibles to be discharged from the furnace. Thus, in the low-temperature gasification process 1, it is preferable to use a fluidized-bed furnace having an excellent separating function of organic substances and incombustibles. Although the case where the fluidized-bed furnace is used in the low-temperature gasification process 1 will be described in the following description, other furnaces such as a kiln furnace, a stoker furnace, or a shaft furnace may be used.

Air 15 or steam 14 is supplied to the low-temperature gasification process 1 as a fluidizing gas. Further, oxygen 13 for partial combustion which is diluted with steam or air is supplied to the low-temperature gasification process 1, when necessary. Even if the fluidized-bed furnace is not used, it is desirable that oxygen for partial combustion is diluted with steam, and then supplied to the furnace. In the low-temperature gasification process 1, although material may be indirectly heated in an external heating process, care should be taken because the separating function of organic substances and incombustibles is lowered. If pyrolysis gas 30 produced in the low-temperature gasification process 1 can be utilized as it is, then gasification efficiency becomes high. However, in the case where the material "a" is treated only in the low-temperature gasification process 1, tar and char which have not been pyrolyzed are contained in the produced gas, and if tar content remains in the gas, tar content is condensed to adhere to portions located in the downstream side of the process, thus causing an adhesion problem. In order to treat with all of organic wastes and avoid the adhesion trouble completely, a high-temperature gasification process 2 in which gasification is conducted at a temperature of 1,300°C or higher is currently provided to pyrolyze tar and char completely after the low-temperature gasification process 1. In the case where material which does not produce tar is used, or generation of tar is suppressed by employing catalyst for decomposing tar, the high-temperature gasification process may be removed, or operating temperature in the high-temperature gasification process may be lowered.

The produced gas 30 discharged from the low-temperature gasification process 1 contains fine ashes besides tar and char, and these substances are supplied together with the gas 30 to the high-temperature gasification process 2. In the high-temperature gasification process 2, organic substances are pyrolyzed at a temperature of 1,300°C or higher and converted into substances having a low molecular weight, i.e., CO, $CO_2$, $H_2$ and $H_2O$, and ash content is discharged as molten slag 18. The gas 31 which is produced by complete gasification of organic substances is supplied to a gas cleaning process 3, and impurities such as slag mist in the gas 31 are removed and cooled in the gas cleaning process 3. The cooled gas 32 is pressurized in a gas pressurizing process, and then introduced into a gas purifying process. In this case, in order to reduce electric power consumption in the gas pressurizing process, a gas cooling and drying process may be provided at an upstream side of the gas pressurizing process to remove moisture in the gas. Waste water discharged from the gas cleaning process 3 is treated in a waste water treatment process 38.

In the conventional method shown in FIG. 16, the produced gas 31 having a high temperature of 1,300°C or higher discharged from the high-temperature gasification process 2 is cooled to a temperature of about 200°C, or to a temperature of 100°C or lower in an atmospheric process. Thus, sensible heat of gas corresponding to temperature difference ranging from 1,100 to 1,200°C is discharged through quenching water as low-temperature exhaust heat, resulting in a considerable quantity of exergy loss. In case of combustible wastes having a calorific value of 8,400 kJ/kg (2,000 kcal/kg) , for example, theoretical temperature of combustion is about 1,500°C when the combustible wastes are combusted by supplying air. Thus, at a rough estimate, 80% ((1300-100)/1500) of thermal energy is converted into low-temperature exhaust heat which has low utility value, and hence 20% of chemical energy originally held by the wastes, at most, remains in the produced gas.

Further, since a large quantity of sensible heat is given to quenching water, a large amount of water is required to cool the quenching water. Even if an air-cooling system is used to cool quenching water, power for driving an air-cooling fan is necessary and wasteful.

Therefore, if quantity of heat corresponding to a temperature ranging from 1,300 to 800°C is recovered from high-temperature sensible heat and utilized effectively in the process, then (1300-800)/1500=33% of efficiency is expected to be increased, and it is possible to allow about 50% of chemical energy to remain in the produced gas by adding the above-mentioned 20% of chemical energy. This holds true for other combustibles such as coal.

**Disclosure of Invention**

It is therefore an object of the present invention to provide an electric generating system by gasification which can recover chemical energy from organic material such as combustible wastes or combustibles such as coal having a low calorific value at a high efficiency while reducing exergy loss as much as possible, and can reduce exergy loss to a minimum in an overall system by recovering thermal energy in the process with a reduced exergy loss as much as possible, or utilizing effectively surplus energy in respective processes in the system.

In order to achieve the above object, according to a first aspect of the present invention, there is provided a method for gasifying material, comprising: a gasification process for pyrolyzing or gasifying material to produce gas; a sensible heat recovery process for recovering sensible heat of said gas produced in said gasification process; and a supply process for supplying said sensible heat recovered in said sensible heat recovery process to said gasification process.

According to a second aspect of the present invention, there is provided a method for utilizing sensible heat in a gasification system, comprising: a gasification process for pyrolyzing or gasifying material to produced gas; a sensible heat recovery process for recovering sensible heat of said gas produced in said gasification process; and a converting process for converting said sensible heat recovered in said sensible heat recovery process into power which is utilized within said gasification system.

According to a third aspect of the present invention, there is provided an electric generating system by gasification for generating fuel gas from materials such as organic wastes and coal and generating electricity by utilizing the fuel gas in a fuel cell, the electric generating system comprising: a low-temperature gasification process for pyrolyzing and gasifying the materials such as organic wastes and coal by partial combustion of the materials at a temperature ranging from 400 to 1,000°C; a high-temperature gasification process for gasifying gaseous material containing solid obtained by the low-temperature gasification process at a temperature ranging from 1,200 to 1,500°C to produce gas; and a high-temperature sensible heat recovery process provided downstream of the high-temperature gasification process for conducting heat exchange between the gas produced in the high-temperature gasification process and having a temperature of 1,000°C or higher, and a gasifying agent for at least one of the low-temperature gasification process and the high-temperature gasification process to recover high-temperature sensible heat for thereby preheating the gasifying agent at a temperature of 600°C or higher.

According to a fourth aspect of the present invention, there is provided an electric generating system by gasification for generating fuel gas from materials such as organic wastes and coal and generating electricity by utilizing the fuel gas in a fuel cell, the electric generating system comprising: a low-temperature gasification process for pyrolyzing and gasifying the materials such as organic wastes and coal by partial combustion of the materials at a temperature ranging from 400 to 1,000°C; a high-temperature gasification process for gasifying gaseous material containing solid obtained by the low-temperature gasification process at a temperature ranging from 1,200 to 1,500°C to produce gas; and a high-temperature sensible heat recovery process provided downstream of the high-temperature gasification process for conducting endothermic chemical reaction to recover high-temperature sensible heat of the produced gas discharged from the high-temperature gasification process and having a temperature of 1,000°C or higher, and utilizing substance obtained by the endothermic chemical reaction for heat of pyrolysis in the low-temperature gasification process or for gas purification such as dechlorination or desulfurization.

According to a fifth aspect of the present invention, there is provided an electric generating system by gasification for generating fuel gas from materials such as organic wastes and coal and generating electricity by utilizing the fuel gas in a fuel cell, the electric generating system comprising: a gasification process for gasifying the materials such as organic wastes and coal to produce gas; a gas purifying process for purifying the gas produced in the gasification process; a boiler process for generating steam by recovering sensible heat of the produced gas; and a gas pressurizing process for pressurizing the produced gas to a pressure ranging from 2 to 10 bar and supplying the pressurized gas to the gas purifying process; wherein at least a part of pressure energy of the steam produced in the boiler process is utilized for power in the gas pressurizing process.

According to a sixth aspect of the present invention, there is provided an electric generating system by gasification for generating fuel gas from materials such as organic wastes and coal and generating electricity by utilizing the fuel gas in a fuel cell, the electric generating system comprising: a gasification process for gasifying the materials such as organic wastes and coal to produce gas; a gas purifying process for purifying the gas produced in the gasification process; and a carbon dioxide absorbing process as a part of the gas purifying process for removing carbon dioxide by amine, latent heat of vaporization of exhaust discharged from a steam turbine being utilized for power in the carbon dioxide absorbing process.

According to a seventh aspect of the present invention, there is provided an electric generating system by gasification for generating fuel gas from materials such as organic wastes and coal and generating electricity by utilizing the fuel gas in a fuel cell, the electric generating system comprising: a gasification process for gasifying the materials such as organic wastes and coal to produce gas; a gas purifying process for purifying the gas produced in the gasification process; a hydrogen purifying process as a part of the gas purifying process for purifying hydrogen by hydrogen absorbing alloy, offgas discharged from the hydrogen purifying process being utilized as a diluent of oxygen supplied to the gasification process.

According to an eighth aspect of the present invention, there is provided an electric generating system by gasification for generating fuel gas from materials such as organic wastes and coal and generating electricity by utilizing the fuel gas in a fuel cell, the electric generating system comprising: a gasification process for gasifying the materials such as organic wastes and coal to produce gas; a gas purifying process for purifying the gas produced in the gasification process; a gas pressurizing process as a part of the gas purifying process for pressurizing the produced gas; and a hydrogen purifying process as a part of the gas purifying process for purifying hydrogen by hydrogen absorbing alloy; wherein offgas discharged from the hydrogen purifying process and cathode offgas discharged from the fuel cell are introduced into an expansion turbine to generate power, and the generated power is utilized for compressing oxygen or oxygen-containing gas supplied to the fuel cell.

According to a ninth aspect of the present invention, there is provided an electric generating system by gasification for generating fuel gas from materials such as organic wastes and coal and generating electricity by utilizing the fuel gas in a fuel cell, the electric generating system comprising: a gasification process for gasifying the materials such as organic wastes and coal to produce gas; a gas purifying process for purifying the gas produced in the gasification process; a gas pressurizing process as a part of the gas purifying process for pressurizing the produced gas; and a hydrogen purifying process as a part of the gas purifying process for purifying hydrogen by hydrogen absorbing alloy; wherein high-pressure hydrogen gas obtained in the hydrogen purifying process is introduced into an expansion turbine to reduce pressure of the hydrogen gas and generate power, and the generated power is utilized for compressing oxygen or oxygen-containing gas supplied to the fuel cell.

According to a tenth aspect of the present invention, there is provided an electric generating system by gasification for generating fuel gas from materials such as organic wastes and coal and generating electricity by utilizing the fuel gas in a fuel cell, the electric generating system comprising: a gasification process for gasifying the materials such as organic wastes and coal to produce gas; a gas purifying process for purifying the gas produced in the gasification process; a boiler process for generating steam by recovering sensible heat of the produced gas; a gas pressurizing process for pressurizing the produced gas to a pressure ranging from 2 to 10 bar; and a hydrogen purifying process as a part of the gas purifying process for purifying hydrogen by hydrogen absorbing alloy; wherein at least a part of pressure energy of the steam produced in the boiler process is utilized as power for the gas pressurizing process, offgas discharged from the hydrogen purifying process and cathode offgas discharged from the fuel cell are introduced into an expansion turbine to generate power, and the generated power is utilized for compressing oxygen or oxygen-containing gas supplied to the fuel cell.

According to an eleventh aspect of the present invention, there is provided an electric generating system by gasification for generating fuel gas from materials such as organic wastes and coal and generating electricity by utilizing the fuel gas in a fuel cell, the electric generating system comprising: a gasification process for gasifying the materials such as organic wastes and coal to produce gas; a gas purifying process for purifying the gas produced in the gasification process; a boiler process for generating steam by recovering sensible heat of the produced gas; a gas pressurizing process for pressurizing the produced gas to a pressure ranging from 2 to 10 bar and supplying the pressurized gas to the gas purifying process; a hydrogen purifying process as a part of the gas purifying process for purifying hydrogen by hydrogen absorbing alloy; wherein at least a part of pressure energy of the steam produced in the boiler process is utilized as power for the gas pressurizing process, high-temperature hydrogen gas obtained in the hydrogen purifying process is introduced into an expansion turbine to generate power, and the generated power is utilized for compressing oxygen or oxygen-containing gas supplied to the fuel cell.

According to a twelfth aspect of the present invention, there is provided an electric generating system by gasification for generating fuel gas from material and generating electricity by utilizing the fuel gas in a fuel cell, the electric generating system comprising: a low-temperature gasification process for pyrolyzing and gasifying the material by partial combustion of the material at a temperature ranging from 400 to 1,000°C; a high-temperature gasification process for gasifying gaseous material containing solid obtained by the low-temperature gasification process at a temperature ranging from 1,200 to 1,500°C to produce gas; and a high-temperature sensible heat recovery process provided downstream of the high-temperature gasification process for conducting heat exchange between the gas produced in the high-temperature gasification process, and a gasifying agent for at least one of the low-temperature gasification process and the high-temperature gasification process to recover high-temperature sensible heat for thereby preheating the gasifying agent.

According to a thirteenth aspect of the present invention, there is provided an electric generating system by gasification for generating fuel gas from material and generating electricity by utilizing the fuel gas in a fuel cell, the electric generating system comprising: a low-temperature gasification process for pyrolyzing and gasifying the material by partial combustion of the material at a temperature ranging from 400 to 1,000°C; a high-temperature gasification process for gasifying gaseous material containing solid obtained by the low-temperature gasification process at a temperature ranging from 1,200 to 1,500°C to produce gas; and a heat recovery process provided downstream of the high-temperature gasification process for conducting heat exchange between the gas produced in the high-temperature gasification process, and a gasifying agent for at least one of the low-temperature gasification process and the high-temperature gasification process to recover heat for thereby preheating the gasifying agent.

According to a fourteenth aspect of the present invention, there is provided an electric generating system by gasification for generating fuel gas from material and generating electricity by utilizing the fuel gas in a fuel cell, the electric generating system comprising: a low-temperature gasification process for pyrolyzing and gasifying the material by partial combustion of the material at a temperature ranging from 400 to 1,000°C; a high-temperature gasification process for gasifying gaseous material containing solid obtained by the low-temperature gasification process at a temperature ranging from 1,200 to 1,500°C to produce gas; and a high-temperature sensible heat recovery process provided downstream of the high-temperature gasification process for conducting endothermic chemical reaction to recover high-temperature sensible heat of the produced gas discharged from the high-temperature gasification process and having a temperature of 1,000°C or higher, and utilizing substance obtained by the endothermic chemical reaction for heat of pyrolysis in the low-temperature gasification process or for gas purification such as dechlorination or desulfurization.

In the case where a high-temperature gasification process is applied especially to combustibles having a low calorific value, the rate of partial combustion is lowered by lowering reaction temperature in gasification or heat is recovered in a high-temperature area to utilize the recovered heat in the processes, whereby conversion ratio from chemical energy to thermal energy in combustibles is lowered as much as possible. For example, if heat recovered in the high-temperature area is used for pyrolysis of the combustibles such as wastes and coal, the conversion rate for converting chemical energy to thermal energy for obtaining heat required for pyrolysis is reduced, thus increasing the amount of chemical energy remaining in the produced gas.

In general, the temperature range in which pyrolysis is conducted is in the range of 350 to 600°C, and if high-temperature sensible heat is recovered from a high-temperature range in the processes, and temperature required for pyrolysis in the range of 350 to 600°C is held by the recovered heat, then such system is effective. However, the heat recovery in the high-temperature range is not easy from limitation of material in the heat transfer section, and in the conventional technology, there is limitation of recovering heat having a temperature of at most 600°C. Even if heat having a temperature of about 600°C is supplied to the pyrolysis process, since heating medium has its own heat capacity, temperature obtained practically in an atmospheric process is no more than about 300°C, and hence a technology for recovering heat having higher temperature has been demanded.

The significance for recovering combustible gas such as hydrogen from combustibles such as wastes and coal having a low calorific value, and utilizing high-temperature heat or energy for recovery of combustible gas by circulating the high-temperature heat or the energy in the processes will be described below. The principal reason why the wastes are difficult to be utilized effectively as fuel is that the wastes contain impurities. Moisture which causes lowering of calorific value, incombustibles such as rubble or metal which impede treatment of the residue, chlorine, sulfur or heavy metals which generate corrosive material or toxic material when combustion or pyrolysis is conducted, and various impurities are mixed with combustible material.

The recovery of pure gas such as hydrogen gas from impure materials is figuratively selection of pure material by chemical sieve. The smaller exergy loss consumed for sieving is, the higher the rate of recovery is, and such process is considered to be excellent process. The greatest exergy loss is generated when chemical energy is converted to thermal energy, and particularly the exergy loss caused by conversion into low-temperature heat is extremely large.

However, in order to cause "chemical sieve" to function effectively, a process for converting organic substances into substances having a low molecular weight such as "pyrolysis" or "gasification" is indispensable for separating impurities and the like from active ingredient. This conversion process into substances having a low molecular (hereinafter referred to as "low-molecular process") weight requires thermal energy, and hence chemical energy in material is converted to thermal energy, and at this time, generation of exergy loss is unavoidable.

Therefore, if thermal energy required for the low-molecular process is supplied from the outside, then exergy loss is reduced, and energy recovery having a high efficiency is possible. However, in order to perform supply of thermal energy from the outside, if exergy loss is generated in another external system, an overall system having a high efficiency cannot be achieved. Therefore, in order to make the overall system a high efficiency system, it is necessary to obtain thermal energy required for the low-molecular process by a method which can reduce exergy loss as much as possible.

Next, the method in which the exergy loss is small and thermal energy required for the low-molecular process is supplied will be studied below.

One of the methods is that high-temperature sensible heat which has been converted into thermal energy is recovered as heat as in above-mentioned the high-temperature sensible heat recovery. Another method is that endothermic chemical reaction is caused using high-temperature sensible heat, and substances produced in the endothermic reaction are supplied to the low-molecular process to cause exothermic reaction. Further, the method in which the substances produced in the endothermic reaction are utilized in other processes such as a gas treatment process is totally effective. By utilizing the substances produced in the endothermic reaction, if combustible gas having theoretical temperature of combustion higher than the heat recovery section is generated, this is a kind of chemical heat pump, and if this is realized, the exergy loss generated when a part of chemical energy in material is converted into thermal energy is utilized for driving the chemical heat pump. This system is more effective.

In the overall system, the rate of exergy loss in the gas purifying process is large, and therefore a technology for reducing the exergy loss in the gas purifying process to a minimum is important. Conventionally, a waste treatment facility, a power generating facility, and the like are independently constructed in each of unit processes, and such facilities are combined to construct a system. In the case where power is necessary in each of the facilities, power is supplied to each of the facilities to energize motors. Therefore, surplus energy generated in the respective facilities is not utilized and is discharged.

For example, in the case where electricity is generated by a steam turbine coupled to a generator, although almost all of facilities have a steam condenser, sensible heat of water vapor absorbed by the steam condenser is not utilized and discharged to the atmosphere. If this sensible heat is effectively utilized, efficiency of overall system is greatly improved. Further, if pressure energy is in excess, it is effective to convert such pressure energy into power by utilizing an expansion turbine. For example, in the case where nitrogen gas having a high concentration may be obtained, and characteristics of such nitrogen gas as inert gas may be effectively utilized, then nitrogen gas may not necessary to be produced and efficiency of the overall system may be improved.

## Brief Description of Drawings

FIG. 1 is a flow diagram showing an energy recovery process by pyrolysis and gasification according to a first embodiment of the present invention;

FIG. 2 is a flow diagram showing an energy recovery system for recovering a part of high-temperature sensible heat as chemical energy in the high-temperature sensible heat recovery process according to a second embodiment of the present invention;

FIG. 3 is a flow diagram showing an energy recovery system for recovering a part of high-temperature sensible heat as chemical energy in the high-temperature sensible heat recovery process according to a third embodiment of the present invention;

FIG. 4 is a flow diagram showing an energy recovery system for recovering a part of high-temperature sensible heat as thermal energy in the high-temperature sensible heat recovery process according to a fourth embodiment of the present invention;

FIG. 5 is a flow diagram showing an energy recovery system for recovering a part of high-temperature sensible heat as thermal energy in the high-temperature sensible heat recovery process according to a fifth embodiment of the present invention;

FIG. 6 is a flow diagram showing a system having a boiler process and a dust collector in a bypass line according to a modified embodiment of the fifth embodiment;

FIG. 7 is a flow diagram showing an overall system incorporating the system shown in FIG. 4 for generating electricity by a fuel cell;

FIG. 8 is a flow diagram showing an overall system incorporating the system shown in FIG. 7 for generating electricity by a fuel cell;

FIG. 9 is a flow diagram showing an overall system incorporating the system shown in FIG. 4 for generating electricity by a fuel cell, offgas in a hydrogen purifying process and/or a fuel cell power generation process being effectively utilized for reducing exergy loss in the overall system;

FIG. 10 is a flow diagram showing an overall system incorporating the system shown in FIG. 4 for generating electricity by a fuel cell, material circulation being conducted further, compared with the embodiment shown in FIG. 9;

FIG. 11 is a flow diagram showing an overall system incorporating the system shown in FIGS. 4 through 10 for generating electricity by a fuel cell, water vapor in the produced gas being recovered and utilized as a gasifying agent;

FIG. 12 is a flow diagram showing an overall system incorporating the system shown in FIGS. 4 through 10 for generating electricity by a fuel cell, water vapor in the produced gas being recovered as a condensed water, and the condensed water being vaporized again and utilized as a gasifying agent;

FIG. 13 is a schematic sectional perspective view of a fluidized-bed gasification furnace used in the low-temperature gasification process and a melting furnace used in the high-temperature gasification process;

FIG. 14 is a schematic vertical cross-sectional view of the fluidized-bed gasification furnace shown in FIG. 10;

FIG. 15 is a block diagram showing a system for effectively utilizing pressure energy of a pressurized gas according to an embodiment of the present invention; and

FIG. 16 is a basic flow diagram of a conventional energy recovery process by pyrolysis and gasification.

## Best Mode for Carrying Out the Invention

An electric generating system by gasification of combustible materials such as wastes or coal according to embodiments of the present invention will be described below with reference to drawings. In FIGS. 1 through 15, like or corresponding parts are denoted by like or corresponding reference numerals throughout views, and repetitive description is eliminated.

FIG. 1 is a flow diagram showing an energy recovery process by pyrolysis and gasification according to a first embodiment of the present invention. Therefore, FIG.1 shows an embodiment in which the materials such as wastes or coal are pyrolized or gasified, heat of generated combustible gas (latent heat) is recovered, and the recovered heat is supplied into the gasification process. The process shown in FIG. 1 comprises a low-temperature gasification process 1 and a high-temperature gasification process 2 as in the conventional process shown in FIG. 16. The process shown in FIG. 1 further comprises a high-temperature sensible heat recovery process 4 at a downstream side of the high-temperature gasification process 2. Therefore, the process shown in FIG. 1 has the heat recovery process in the downstream of the gasification process. A mixture of air 15, steam 14 and oxygen 13 is preheated to a temperature ranging from 600 to 1,000°C in the high-temperature sensible heat recovery process 4 by heat exchange with a high-temperature produced gas 31 discharged from the high-temperature gasification process 2, and supplied to the low-temperature gasification process 1 as a fluidizing gas 16 and to the high-temperature gasification process 2 as a gasifying agent 17. In this manner, the produced gas 31 is changed to a produced gas 31a which is cooled to a moderate temperature before the produced gas 31a is introduced into the gas cleaning process 3. Since heat is supplied into the gasification process by the fluidizing gas 16 preheated to a high temperature, the amount of materials which are partially combusted in the gasification process is reduced. Further, the fluidizing gas 16 preheated to a high temperature supplies heat to the low-temperature gasification process 1 to thus reduce the amount of materials which are partially combusted in the low-temperature gasification process 1 by the amount corresponding to the heat supplied by the fluidizing gas 16. Furthermore, the gasifying agent 17 preheated to a high temperature supplies heat to the high-temperature gasification process 2 to thus reduce the amount of combustible contents including combustible gas and char which are partially combusted in the high-temperature gasification process 2 by the amount corresponding to the heat supplied by the gasifying agent 17. Since the concentrations of CO and $H_2$ are high in the generated gas, the generated gas is utilized as the materials for chemical industries for generating gasoline, alcohol and ammonia and also as the fuel for combustion-type electric power generation facilities such as a fuel cell and a gas-engine. In the gas cleaning process 3, the produced gas 31a, from which impurities such as slag mist are removed, is cooled and the cooled gas 32 is then supplied to a subsequent process such as a gas pressurizing process. Waste water discharged from the gas cleaning process 3 is treated in a waste water treatment process 38.

In order to operate the system shown in FIG. 1 at a high efficiency, it is essential to reduce heat capacity by reducing the amount of substances, as much as possible, supplied to the low-temperature gasification process 1 and the high-temperature gasification process 2 from the outside. Therefore, it is desirable that oxygen concentration of an oxidizing agent supplied to the low-temperature gasification process 1 and the high-temperature gasification process 2 be as high as possible. However, if pure oxygen is supplied thereto, then theoretical temperature of combustion is remarkably increased, and hence there is a possibility that local areas in the furnace are excessively heated to reach a dangerous temperature. Thus, the supply of pure oxygen is not preferable. Therefore, in the present invention, oxygen is diluted with steam 14 or air 15, and then supplied to the low-temperature gasification process 1 and the high-temperature gasification process 2. In case of using a fluidized-bed furnace in the low-temperature gasification process 1, a certain flow rate of gas serving as a fluidizing gas is required to maintain fluidization of bed, and if the fluidized medium should become excessively high temperature, the bed cannot be fluidized sufficiently by agglomerating the fluidized medium. Thus, it is difficult to increase oxygen concentration so much.

On the other hand, in the high-temperature gasification process 2, the interior of the furnace has a temperature of 1,300°C or higher, and there is little possibility that high internal temperature causes problems. Thus, oxygen concentration in the high-temperature gasification process 2 can be increased to a degree higher than that in the low-temperature gasification process 1. According to actual results by the inventors of the present invention, it is desirable that oxygen concentration is in the range of 15 to 50% in the low-temperature gasification process 1, and it is possible that oxygen concentration is equal to or higher than 50% in the high-temperature gasification process 2. In the present invention, the temperature of preheated gas is so high that if oxygen concentration is excessibly high, oxidation reaction is accelerated to cause various problems including oxidation or burning of oxygen nozzles. Therefore, after mixing oxygen, excessive heating should be avoided, and if oxygen concentration of oxidizing agent exceeds 50%, it is desirable to mix oxygen with high-temperature air or high-temperature steam immediately before supplying the oxidizing agent into the furnace.

As a means for recovering high-temperature sensible heat, there has been proposed by the inventor of the present invention a technology for recovering high-temperature heat having a temperature of 800°C or higher from a high-temperature region having a temperature of 1,000°C or higher by using heat transfer tubes made of ceramics or heat-resistant cast steel in a furnace for conducting complete combustion such as a gasification and slagging combustion furnace. In the complete combustion furnace, although a heat recovery section is kept at a high temperature, it is in an oxidizing atmosphere, and hence even if the transfer tubes are made of heat-resistant cast steel, the heat transfer tubes have high durability and a long service life.

One of the objects of the present invention is to perform heat recovery at a high temperature in a reducing atmosphere by pyrolysis or gasification, and therefore corrosion condition of metals is severer than that in an oxidizing atmosphere. Thus, the heat transfer tubes made of metal such as heat-resistant cast steel have a remarkably lowered durability. Therefore, it is desirable that the heat transfer section for heat recovery at a high temperature is made of ceramics comprising non-oxides such as SiC. Although metals such as heat-resistant cast steel or ceramics comprising oxides may be used, or other materials may be used, they have lower durability than ceramics containing non-oxides, and hence any measures are required to be taken.

Further, as a means for recovering high-temperature sensible heat, a thermal storage type heat exchanger having a fluid passage switching function which has been proposed by the inventors of the present invention may be used. In the thermal storage type heat exchanger, high-temperature combustion gas is introduced into a heat reservoir comprising a honeycomb-like ceramics to store heat in the heat reservoir, and then a gas flow passage is switched to introduce gas to be heated into the heat reservoir which in turn heats the introduced gas by the heat stored in the heat reservoir. This regenerative heat exchanger has characteristics which can easily conduct heat exchange in a high-temperature range, compared with an indirect-type exchanger having heat transfer tubes.

However, in the thermal storage type heat exchanger, a high-temperature gas and a gas to be heated flow in the same fluid passage, and hence a sealing technology is important. In the case where the high-temperature gas is a combustible gas and the gas to be heated is an oxygen-containing gas as in the present invention, there is a possibility that oxygen leaks through the sealing portion into the side of the combustible gas to cause burning of the heat reservoir. Therefore, it is necessary not to mix oxygen with the gas to be heated, and if the high-temperature gas contains corrosive components, the gas to be heated is contaminated in the heat reservoir. Thus, it is necessary to manufacture ducts located in the side of the gas to be heated by high-grade material. In case of employing the regenerative heat exchanger, special attention should be given to the processes.

Further, in the case where energy is recovered from the high-temperature sensible heat and the recovered energy is recirculated in the processes, if the recovered energy is circulated only by sensible heat, then heat capacity of circulative heat medium cannot be neglected and the amount of heat medium to be circulated must be excessively increased. Thus, it is effective that heat recovery is performed not by sensible heat but by chemical energy. This is because some chemical energy may hold the amount of energy extraordinarily larger than sensible heat, and may not be excessively affected by heat capacity of heat medium. Further, chemical energy has an exergy ratio (exergy/enthalpy) higher than thermal energy, and hence chemical energy is effective as a recovery means for recovering high-temperature sensible heat because exergy loss is small.

FIG. 2 is a flow diagram showing an energy recovery system for recovering a part of high-temperature sensible heat as chemical energy in the high-temperature sensible heat recovery process according to a second embodiment of the present invention. In this embodiment, calcium carbonate ($CaCO_3$) 19 is supplied to a high-temperature sensible heat recovery process 4a, and decarbonation reaction which is endothermic reaction is carried out to cool the gas in the high-temperature sensible heat recovery process 4a. In case of supplying calcium carbonate, the produced quicklime (CaO) 20a may be supplied to the low-temperature gasification process 1 as desulfurizing agent or dechlorination agent, or may be utilized in a dry-type gas cleaning process 3a if such dry-type gas cleaning process 3a is provided as shown in FIG. 2.

In case of supplying quicklime (CaO) 20a to the low-temperature gasification process 1, quicklime reacts with hydrogen sulfide, hydrogen chloride or carbon dioxide to generate heat in the fluidized-bed. Therefore, quicklime (CaO) supplied to the fluidized-bed serves as desulfurizing agent and dechlorination agent, and also serves to maintain temperature of the low-temperature gasification process 1, and hence the amount of oxygen to be supplied to the gasification furnace can be reduced to further improve cold gas efficiency. Calcium compound which has reacted in the gasification furnace is removed from the gasification furnace, and returned to the high-temperature sensible heat recovery process 4a to be circulated. Therefore, limestone ($CaCO_3$) can be utilized as heating medium for high-temperature sensible heat recovery.

The high-temperature gas 31 produced in the high-temperature gasification process 2 is cooled to a temperature of 650°C or lower in the high-temperature sensible heat recovery process 4a and a boiler process 5, and then is purified by being in contact with quicklime (CaO) 20a. The purified gas 32 is supplied to a subsequent process.

In case of supplying quicklime (CaO) 20a to the dry-type gas cleaning process 3a, quicklime reacts with hydrogen sulfide, hydrogen chloride or carbon dioxide in the produced gas 31b having a high temperature. The reactant calcium compound 20b removed from the dry-type gas cleaning process 3a is supplied to the high-temperature sensible heat recovery process 4a and circulated to recover sensible heat of the produced gas and to convert the calcium compound 20b into CaO which is in turn utilized again in the dry-type gas cleaning process 3a or the gasification process, although the reactant calcium compound 20b has been discarded in the conventional system. Therefore, the amount of calcium carbonate ($CaCO_3$) 19 to be consumed can be reduced, and hence the amount of discharged material discharged from the system can be reduced.

FIG. 3 is a flow diagram showing an energy recovery system for recovering a part of high-temperature sensible heat as chemical energy in the high-temperature sensible heat recovery process 4 according to a third embodiment of the present invention. In the third embodiment, a medium-and-low-temperature sensible heat recovery process 6 is added to the system shown in FIG. 2. Specifically, a medium-and-low-temperature sensible heat recovery process 6 in the range of 200 to 650°C is provided in a subsequent stage of the dry-type gas cleaning process 3a.

In the dry-type gas cleaning process 3a which utilizes CaO, the following reactions which are exothermic reactions occur.

| | |
|---|---|
| $CaO + H_2O = Ca(OH)_2$ | $\Delta H = -63.0$ kJ |
| $CaO + H_2O + CO = CaCO_3 + H_2$ | $\Delta H = -219.3$ kJ |
| $CaO + CO_2 = CaCO_3$ | $\Delta H = -177.9$ kJ |

Therefore, heat generated in the above exothermic reactions is recovered in the medium-temperature sensible heat recovery process 6 and effectively utilized. Specifically, a mixture of air 15, steam 14 and oxygen 13 is preheated in the two-stage processes comprising the medium-temperature sensible heat recovery process 6 and the high-temperature sensible heat recovery process 4a, and then supplied to the low-temperature gasification process 1 and the high-temperature gasification process 2. The produced gas 32b discharged from the medium-temperature sensible heat recovery process 6 is supplied to a subsequent process.

FIG. 4 is a flow diagram showing an energy recovery system for recovering a part of high-temperature sensible heat as thermal energy in the high-temperature process 2 according to a fourth embodiment of the present invention. This system may incorporate a system for recovering a part of high-temperature sensible heat as chemical energy as shown in FIGS. 2 and 3, although such system is not illustrated in FIG. 4. The system shown in FIG. 4 employs a wet-type gas cleaning process 3b such as a scrubber as a gas cleaning process 3. In this embodiment, a boiler process 5, a medium-temperature sensible heat recover process 6 , a dust collector 7, and a wet-type gas cleaning process 3b are disposed in a subsequent stage of the high-temperature sensible heat recovery process 4 shown in FIG. 1. By providing the dust collector 7 in the upstream side of the wet-type gas cleaning process 3b, fly ash 21 can be removed from the produced gas 31c to reduce a load for removing dust in the wet-type gas cleaning process 3b, and therefore a load for waste water treatment in a waste water treatment facility can be reduced. The dust collector 7 may not be necessarily provided, and if it is not provided, ash content accompanied by gas is recovered as wet ash.

FIG. 5 is a flow diagram showing an energy recovery system for recovering a part of high-temperature sensible heat as thermal energy in the high-temperature sensible heat recovery process 4 according to a fifth embodiment of the present invention. The system shown in FIG. 5 is used for treating special material which does not generate tar at the outlet of the low-temperature gasification process 1. In this embodiment, a bypass line $B_P$ which bypasses the line lying between the outlet of the low-temperature gasification process 1 and the inlet of the dust collector 7 is provided, and dampers V1, V2 for switching the lines are provided in the main line and the bypass line $B_P$, respectively. As describe above, in case of gasifying material only by quantity of heat of the material to be gasified, the lower gasification temperature is, the higher cold gas efficiency is, and energy recovery ratio is improved. Thus, by constructing the system as shown in FIG. 5, the damper V1 is closed and the damper V2 is opened, for example, in the daytime when electric power demand is high, whereby material is gasified in the low-temperature gasification process 1 to produce gas and the produced gas is utilized to generate electricity at a high efficiency. Further, the damper V1 is opened and the damper V2 is closed in the nighttime when electric power demand is low, whereby ashes which have been stored in a dry ash storing process 25, because such ashes have not been melted in the daytime, is melted to form slag. That is, the system shown in FIG. 5 enables two modes of operation.

In the case where changeover of the operation mode is conducted, the gas flow passages must be clearly separated from each other for the high-temperature gasification mode and the low-temperature gasification mode, respectively. This is because when operating mode is changed from the high-temperature gasification mode in which ashes are melted and converted into molten slag to the low-temperature gasification mode, ashes in a molten state are gradually solidified with decreasing temperature of the high temperature gasifier, and if the same flow passage is used, new ashes are supplied from the low-temperature gasification process into the same flow passage in which semi-melted slag is present, and then the supplied new ashes adhere to the surface of the semi-melted slag. If this undesirable condition continues for a long time, ashes are accumulated in the high-temperature gasification furnace, resulting in a clogged condition of the furnace.

Therefore, it is desirable that the flow passages are separated from each other for each of the operation modes by operating the dampers V1 and V2. However, if the flow passages are simply separated from each other as shown in FIG. 5, the dumpers, for switching flow passages, which are applicable to high dust concentration are required. Thus, as shown in FIG. 6, it is desirable that a boiler process 5 and a dust removing process 7 are provided in each of the flow passages. That is, a bypass line $B_P$ which bypasses the line lying between the outlet of the low-temperature gasification process and the inlet of the wet-type gas cleaning process 3b is provided, and dampers V1, V2 for switching the lines are provided in the main line and the bypass line $B_P$, respectively. Boiler processes 5, 5a and dust collectors 7, 7a are provided in the main line and the bypass line $B_P$, respectively.

The systems shown in FIGS. 1 through 6 have no limitation of operating pressure, and can be operated from a slightly negative pressure to a high positive pressure. However, in case of treating wastes under a pressurized condition, it is necessary to feed wastes having various shapes and dimensions, and a large-sized apparatus such as a lock hopper for sealing the interior of the furnace is required. Thus, if a forming process of wastes such as an RDF process is not performed, an atmospheric pressure is preferable.

Further, when moisture contained in material is vaporized in the low-temperature gasification process 1, latent heat for vaporization of the moisture is absorbed during vaporization to thus generate a large exergy loss. Specifically, thermal energy corresponding to operating temperature of the furnace, for example, about 600°C is absorbed as latent heat for vaporization of moisture and converted to energy having a low exergy corresponding to saturation temperature in the operating pressure of the low-temperature gasification process, for example, about 100°C, if the furnace is operated at atmospheric pressure. Therefore, in order to suppress the exergy loss in the process, it is effective that material is dried, and then supplied to the furnace.

FIG. 7 is a flow diagram showing an overall system incorporating the system for generating electricity by a fuel cell. FIG. 7 shows the system in an example which comprises a gasification process for gasifying combustible materials such as wastes or coal, and a sensible heat recovery process for recovering sensible heat from gas generated in the gasification process, and heat recovered in the sensible heat recovery process is converted to power which is utilized within the system. The overall system shown in FIG. 7 includes a pure hydrogen producing system which can be combined with a polymer electrolyte fuel cell which is about to put to practical use. The polymer electrolyte fuel cell may be replaced with a phosphoric acid fuel cell which uses pure hydrogen as fuel. It should be noted that a molten carbonate fuel cell or a solid oxide fuel cell which can utilize not only pure hydrogen but also carbon monoxide as fuel may be used. In case of using the molten carbonate fuel cell or the solid oxide fuel cell, it is not necessary to purify gas up to a degree of pure hydrogen, and hence processes which use the molten carbonate fuel cell or the solid oxide fuel cell are much simpler than those in the polymer electrolyte fuel cell and the phosphoric acid fuel cell.

The produced gas 32b discharged from the wet-type gas cleaning process 3b is pressurized by a first compressor 41 to a pressure of 0.5 bar or higher. Then, the pressurized gas is supplied through a desulfurizing process 43, a CO converting process 44, and a CO selective oxidizing process 46 to a second compressor 48 in which the gas discharged from the selectively oxidizing process 46 is pressurized to a pressure equal to or larger than 4 or 5 bar, preferably equal to or larger than 6 bar. The gas discharged from the second compressor 48 is supplied to a $CO_2$ removing process 50. The gas 37 discharged from the $CO_2$ removing process 50 is supplied to a CO adsorbing and removing process 52, and then to a hydrogen purifying process 54 in which pure hydrogen 39 is generated. The pure hydrogen 39 is supplied to a fuel cell power generation process 56 in which electricity is generated.

The compression ratios in the two compressors 41, 48 may be freely selected, provided that the gas is pressurized by the compressors 41, 48 to a pressure equal to or larger than 4 or 5 bar, preferably 6 bar. If the gas is pressurized to a sufficient pressure by a single compressor, only one compressor may be provided. However, in order to reduce power for compressing a large amount of water vapor contained in the produced gas, it is preferable to provide two compressors, one of which may be used for pressurizing the produced gas after water vapor is condensed. It is desirable that power for compressing the produced gas is generated by a steam turbine driven by high-pressure steam generated in the boiler process 5. Although the second compressor 48 is driven by a steam turbine 49 in the embodiment shown in FIG. 7, the first compressor 41 may be driven by a steam turbine, or the first and second compressors 41, 48 may have a coaxial structure and be driven by a steam turbine. If power required for driving the compressors is not obtained only by steam generated within the system, then electric motor may be used as auxiliary power.

A trace amount of hydrogen sulfide may be contained in the cleaned gas 32b depending on operating condition and operation control of the cleaning process 3b. In order to prevent catalyst in the converting process 44 and catalyst in the selectively oxidizing process 46 from being poisoned, it is desirable to provide a dry-type desulfurizer 43 as a highly desulfurizing means for thereby reducing concentration of hydrogen sulfide to 1 ppm or lower, preferably 0.1 ppm or lower. Further, if carbonyl sulfide is generated in the gasification process, it is necessary to provide a converter for converting carbonyl sulfide to hydrogen sulfide at the upstream side of the desulfurizer 43.

According to the present invention, the desulfurizer 43 comprises a container charged with a desulfurizing agent. Although the shape of the container and material of the container are not limited, it is desirable that the shape of container is cylindrical and the material of the container is stainless steel because of temperature and pressure of gas. As a desulfurizing agent, oxides such as iron oxide, zinc oxide or calcium oxide, or activated carbon, or adsorbent such as activated carbon surface-modified with basic agents is preferable. As a shape of the desulfurizing agent, granular shape, pellet-like shape or honeycomb-like shape is preferable. In case of using iron oxide, the desulfurizing reaction is expressed as follows:

$$Fe_2O_3 + 3H_2S \rightarrow Fe_2S_3 + 3H_2O$$

In the desulfurizing process 43 and the converting process 44, it is desirable that temperature of the produced gas is in the range of 150 to 200°C, and hence a heater 42 for heating the produced gas may be provided at the upstream side of the desulfurizing process, if necessary.

As shown in FIG. 8, as a heat source for heating the produced gas in the heater 42, a part of heat recovered in the medium-temperature sensible heat recovery process 6 may be utilized or heat generated in the converting process 44 may be utilized. In case of utilizing heat generated in the converting process 44, such heat can be easily recovered by heat exchange between the produced gas 34 flowing in the converting process 44 and the gas 35 discharged from the converting process 44 in an indirect-contact type heat exchanger 58 which is a shell and tube type heat exchanger. Further, if compression ratio in the first compressor 41 is set to a high value, the gas having a temperature of 150°C or higher can be obtained by temperature rising effect caused by compression, and the heater 42 is not necessary.

Further, in order to save power consumed in the first compressor 41, as shown in FIG. 11, it is effective that a gas cooler 40 is provided at the upstream side of the first compressor 41 to condense water vapor contained in the produced gas 32b discharged from the gas cleaning process 3b. However, it should be noted that when carbon monoxide is converted into hydrogen at the downstream side of the converting process 44, as partial pressure of water vapor is high, the conversion reaction is accelerated, and hence it is necessary to cause the required amount of water vapor to remain in the produced gas. Therefore, it is desirable that the produced gas is not cooled to a temperature of 60°C or lower in the gas cooler 40.

The selectively oxidizing process 46 is a process for removing carbon monoxide which has not been converted into hydrogen in the converting process 44 and remains in the order of a few percentages in the produced gas. Carbon monoxide is a poison component for the polymer electrolyte fuel cell and the phosphoric acid fuel cell, and if the polymer electrolyte fuel cell or the phosphoric acid fuel cell is employed in the fuel cell power generation process 56, then carbon monoxide is required to be removed to a degree of ppm order. Particularly, if hydrogen absorbing alloy is employed in the hydrogen purifying process 54 for concentrating hydrogen, carbon monoxide is a poison component for the hydrogen absorbing alloy, further care should be taken for removing carbon monoxide. Oxygen is supplied to the selectively oxidizing process 46 at about 3 times mole ratio of carbon monoxide.

The gas 36 after the selectively oxidizing process 46 is supplied to a $CO_2$ removing process 50 to absorb and separate $CO_2$. In case of using absorption liquid containing amines in the $CO_2$ removing process 50, absorption liquid is heated and regenerated. The higher partial pressure of $CO_2$ contained in the gas at the inlet of an absorption tower used in the $CO_2$ removing process 50 is, the smaller the amount of absorption liquid circulated in the absorption tower is, thus making the absorption tower compact and reducing quantity of heat required for regeneration.

Therefore, in the present invention, the steam turbine 49 is driven by utilizing pressure energy of high-pressure steam 60 recovered in the boiler 5, and the gas 36 after the selectively oxidizing process 46 is pressurized with consuming electric energy as little as possible, and latent heat of low-pressure steam 61 discharged from the steam turbine 49 is utilized as heat for regeneration of absorption liquid. In the present invention, operational condition of the steam turbine 49 is adjusted so that pressure of the low-pressure steam 61 is set to be in the range of 1.7 to 2.7 bar so as to keep saturation temperature in the range of 115 to 130°C. With this arrangement, a large amount of latent heat which has been obliged to be discarded in the cooling tower or the like can be utilized to concentrate $CO_2$.

Since partial pressure of hydrogen gas or nitrogen gas in the produced gas 36 increases by pressure rise caused by the steam turbine 49, a subsequent adsorption process 52 and a hydrogen purifying process 54 by hydrogen absorbing alloy are conducted under favorable operational conditions.

The produced gas 37 from which $CO_2$ is separated is supplied to the subsequent adsorption process 52 in which carbon monoxide (CO) is perfectly removed because even if a small amount of CO remains in the produced gas, such CO exerts a harmful influence on the polymer electrolyte fuel cell. Thereafter, the produced gas is supplied to the hydrogen purifying process 54, and nitrogen and argon remaining in the produced gas is removed to produce pure hydrogen 39 which is in turn supplied to the fuel cell power generation process 56. Air as an oxidizing agent is pressurized by a compressor 62, and then supplied to the fuel cell power generation process 56.

Nitrogen and argon discharged from the hydrogen purifying process 54 as offgas can be effectively utilized in many locations of the gasification process as inert gas. Further, the offgas has a pressure of about 6 bar, and hence it can be utilized as a substitute for instrument air.

FIG. 9 is a flow diagram showing an overall system incorporating the system shown in FIG. 4 for generating electricity by a fuel cell. In this embodiment, in order to reduce exergy loss in the overall system, offgas discharged from the hydrogen purifying process 54 or the fuel cell power generation process 56 is effectively utilized. In order to reduce energy for compressing air as an oxidizing agent in the fuel cell power generation process 56, oxygen is compressed by the compressor 62, and then supplied to the fuel cell. Thus, compression energy is reduced to about 1/5. Since the utilization factor of oxygen is at most about 50% in one pass in the fuel cell power generation process 56, cathode offgas 71 is circulated and used.

In case of using a PSA (pressure swing adsorption) as an oxygen generating apparatus, oxygen concentration is about 93% and the remainder is nitrogen. Therefore, in case of circulating and using the offgas 71, it is necessary to discharge nitrogen to the outside of the system. It is effective to utilize nitrogen containing oxygen gas taken out from a cathode circulation line in the fuel cell power generation process 56 as an oxidizing agent in the low-temperature gasification process 1 and the high-temperature gasification process 2. This cathode offgas has a pressure of about 6 bar, and hence a blower for pressure rise is not necessary even if a fluidized-bed furnace is employed in the low-temperature gas if ication process 1. Further, in the case where the amount of a fluidizing gas is insufficient only by the cathode offgas, nitrogen gas and argon gas having a certain pressure discharged from the hydrogen purifying process 54 are added to the cathode offgas for thereby ensuring the sufficient amount of gas. Since the cathode offgas 71, nitrogen gas and argon gas have a pressure of about 6 bar, they are supplied to an expansion turbine to recover power before supplying the low-temperature gasification process 1 or the high-temperature gasification process 2.

By circulating and utilizing the offgas discharged from the process in the above manner, the amount of material discharged to the outside of the system can be reduced and this effect is not negligible. The thermal energy or pressure energy accompanied by material discharged to the outside of the system and discarded can be reduced, and hence this method is suitable for recovering energy at a high efficiency. In the embodiment shown in FIG. 9, low-pressure steam is generated by utilizing heat recovered by gas coolers 57, 58 and 59, and utilized as a gasifying agent.

FIG. 10 is a flow diagram showing an overall system incorporating the system shown in FIG. 4 for generating electricity by a fuel cell. FIG. 10 shows the embodiment which is more suitable for material circulation than the embodiment shown in FIG. 9. The produced gas 32b after the wet-type gas cleaning process 3b contains a large amount of water vapor, and thus only water vapor in the produced gas is separated in a water vapor separation process 70 after the produced gas 32b is pressurized in the first compressor 41. Then, the separated water vapor is utilized in the low-temperature gasification process 1 or the high-temperature gasification process 2 as a gasifying agent. The water vapor separation process 70 may employ a separation membrane for separating water vapor (water vapor separation membrane) which has been already put to practical use can be utilized. FIG. 11 is a flow diagram showing this system.

In case of utilizing the separation membrane in the water vapor separation process 70, the larger the difference of partial pressure in water vapor between the both sides of the membrane is, the more the amount of steam, which passes through the membrane, per unit area of the membrane is. Therefore, it is desirable to make compression ratio large in the first compressor 41. However, if the compression ratio in the first compressor 41 is large, power consumption is large. Thus, as shown in FIG. 11, a gas cooler 40 is provided, if necessary, and adjusts cooling temperature of the gas, thereby ensuring the amount of water vapor in the produced gas required in the water vapor separation process 70 and the converting process 44. Further, as shown in FIG. 12, water vapor in the produced gas is condensed in the gas cooling process 59, and the condensed water is recovered in a water tank 85 to be utilized.

In the embodiment shown in FIG. 10, oxygen is pressurized by utilizing pressure energy of nitrogen gas which is offgas in the hydrogen purifying process 54. According to calculation by the inventors of the present application, nitrogen gas which is about 1.5 to 3 times flow rate of oxygen to be compressed is discharged from the hydrogen purifying process 54 as offgas, and has sufficient energy for compressing oxygen.

In the present invention, a plurality of processes for pressurizing the produced gas or the like are provided by utilizing pressure energy in the processes, and the flow rates of expansion gas and gas to be compressed in these processes are proportional to the feed rate of material "a". Therefore, it is effective to utilize all of pressure energy, irrespective of fluctuation of the flow rate, by connecting the steam turbine, the expansion turbine and the compressors with a single shaft. In the case where energy for compression is insufficient only by the expansion gas, electric motor may be used as auxiliary power. Further, according to the flow rate of each gas, the steam turbine, the expansion turbine and the compressors may be combined properly, and hence two shafts or three shafts may be used, or electric motor may be provided as auxiliary power.

In the embodiments, shown in FIGS. 7, 8 and 9, a technology for heating high-temperature air which has been proposed by the inventors of the present application is utilized to heat a fluidizing gas for thereby utilizing recovered heat as a part of gasification heat and reducing oxygen ratio in the low-temperature gasification process 1, thereby increasing cold gas efficiency. However, if all of gasification heat is furnished by recovered sensible heat, the amount of fluidizing gas becomes enormous, quantity of heat required for increasing temperature in the high-temperature process to about 1,350°C becomes enormous, thus lowering cold gas efficiency. Therefore, in the present invention, the sensible heat is recovered by the amount corresponding to the amount of gas required for fluidization.

When purified hydrogen is supplied to the fuel cell, hydrogen having a higher pressure is preferable, and in general, hydrogen is pressurized to a pressure of about 6 bar. In the process of the present invention, since the produced gas from which $CO_2$ is separated is supplied to the gas purifying process after the produced gas is pressurized, the devices or equipment in the gas purifying process may be compact, and in-plant power consumption rate may be reduced. Although an extra energy for pressurizing gas other than hydrogen is required, offgas after separation of hydrogen is composed mainly of nitrogen, and is recovered while maintaining the pressure, and hence the offgas may be utilized for purge gas in the gasification furnace or a substitute for instrument air. In the case where the amount of recovered nitrogen is large, the oxygen concentration of air supplied to gasifier may be adjusted to adjust the amount of nitrogen supplied to the system. The energy for pressure rise may be furnished by steam generated in the processes.

In the conventional method, although latent heat of low-pressure steam has been discarded in a condenser, such latent heat can be effectively utilized in the $CO_2$ absorption process ($CO_2$ removing process), and $CO_2$ can be recovered at a high purity. Therefore, if $CO_2$ is effectively utilized, prevention of the warming of the Earth's temperature can be achieved.

Next, the structure of furnaces which are suitable for the low-temperature gasification process 1 and the high-temperature gasification process 2 shown in FIGS. 1 through 12 will be described below with reference to FIGS. 13 and 14.

FIG. 13 is a schematic sectional perspective view of a fluidized-bed gasification furnace 80 used in the low-temperature gasification process 1 and a slagging combustion furnace 90 used in the high-temperature gasification process 2. FIG. 14 is a schematic vertical cross-sectional view of the fluidized-bed gasification furnace 80 shown in FIG. 13.

As shown in FIGS. 13 and 14, a conical distributor plate 76 is disposed at the furnace bottom of the fluidized-bed gasification furnace 80. A fluidizing gas supplied through the distributor plate 76 comprises a central fluidizing gas 207 which is supplied from a central portion 204 of the furnace bottom to the interior of the furnace as an upward flow, and a peripheral fluidizing gas 208 which is supplied from a peripheral portion 203 of the furnace bottom to the interior of the furnace as an upward flow. The total amount of oxygen in all of the fluidizing gas is set to be 5% or higher and 30% or lower of the theoretical amount of oxygen required for combustion of materials such as wastes or coal. Thus, the interior of the furnace 80 is kept in a reducing atmosphere.

The mass velocity of the central fluidizing gas 207 is set to be smaller than that of the peripheral fluidizing gas 208. The upward flow of the fluidizing gas in an upper peripheral region of the furnace is deflected toward a central region of the furnace by a deflector 206. Thus, a descending fluidized-bed 209 of the fluidized medium (generally silica sand) is formed in the central region of the furnace, and an ascending fluidized-bed 210 is formed in the peripheral region of the furnace. As indicated by the arrows 118, the fluidized medium ascends in the ascending fluidized-bed 210 in the peripheral region of the furnace, is deflected by the deflector 206 to an upper portion of the descending fluidized-bed 209, and descends in the descending fluidized-bed 209. Then, as indicated by the arrows 112, the fluidized medium moves along the fluidizing gas distributor plate 76 and moves into a lower portion of the ascending fluidized-bed 210. In this manner, the fluidized medium circulates in the ascending fluidized-bed 210 and the descending fluidized-bed 209 as indicated by the arrows 118, 112.

While the materials "a" supplied to the upper portion of the descending fluidized-bed 209 by a metering feeder 102 descend together with the fluidized medium in the descending fluidized-bed 209, the materials are volatilized with heating by fluidized medium. Because there is no or little oxygen available in the descending fluidized-bed 209, volatile matter (generated gas) generated by pyrolysis is not combusted and passes through the descending fluidized-bed 209 as indicated by the arrows 116. Consequently, the descending fluidized-bed 209 is a gasification zone G. The volatile matter moves into a freeboard 89 as indicated by the arrow 120, and is discharged from a gas outlet 108.

Char (fixed carbon) and tar 114 produced in the descending fluidized-bed 209 moves together with the fluidized medium from the lower portion of the descending fluidized-bed 209 to the lower portion of the ascending fluidized-bed 210 in the peripheral region of the furnace as indicated by the arrows 112, and is partially oxidized by the peripheral fluidizing gas 208 having a relatively large oxygen concentration. Consequently, the ascending fluidized-bed 210 forms an oxidization zone S. In the ascending fluidized-bed 210, the fluidized medium is heated by the heat produced when char (fixed carbon) is oxidized. The heated fluidized medium is turned over by the deflector 206 as indicated by the arrows 118, and transferred to the descending fluidized-bed 209 where it serves as a heat source for volatilization. In this manner, the fluidized-bed 209 is kept at a temperature ranging from 500 to 600°C. A ring-shaped incombustibles discharge port 205 is formed at the peripheral portion of the furnace bottom of the fluidized-bed gasification furnace 80.

In the fluidized-bed gasification furnace 80 shown in FIGS. 13 and 14, the gasification zone G and the oxidization zone S are formed in the fluidized-bed, and the fluidized medium circulates in both zones. Because the fluidized medium serves as a heat transfer medium, combustible gas having a high heating value is generated in the gasification zone G, and char and tar 114 which are difficult to be gasified is combusted efficiently in the oxidization zone S. Consequently, gasification efficiency of materials can be improved and combustible gas (pyrolysis gas) having a good quality can be generated.

The gas outlet 108 of the fluidized-bed gasification furnace 80 is connected to a gas inlet 142 of a slagging combustion furnace 90. The slagging combustion furnace 90 includes a cylindrical primary combustion chamber 94 having a substantially vertical axis and a secondary combustion chamber 95 which is inclined in a horizontal direction. The gas and fine particles produced in the fluidized-bed gasification furnace 80 are supplied through the gas inlet 142 to the primary combustion chamber 94 so as to swirl around the axis thereof.

The primary combustion chamber 94 has a start-up burner 132 mounted on its top, and a plurality of air nozzles 134 for supplying combustion air so as to swirl around the axis thereof. The secondary combustion chamber 95 has an auxiliary burner 136 disposed in the vicinity of the junction between the primary and secondary combustion chambers 94, 95, and air nozzles 134 for supplying combustion air. A tertiary combustion chamber 96 communicates with the secondary combustion chamber 95 at its lower end. A discharge port 97 is disposed between the secondary combustion chamber 95 and the tertiary combustion chamber 96 for discharging molten ash content. Further, a gas outlet 154 is formed above the discharge port 97. A radiation plate 162 is provided in the tertiary combustion chamber 96 for reducing heat which would be lost from the exhaust port 154 by way of radiation.

According to the fluidized-bed gasification furnace 80 and the slagging combustion furnace 90 shown in FIGS. 13 and 14, the two-stage gasification of wastes can be conducted in a preferable manner.

FIG. 15 is a block diagram showing a system for utilizing pressure energy of a pressurized gas according to an embodiment of the present invention. FIG. 15 shows a connecting structure of steam turbines, expansion turbines and compressors. The steam turbine 49, the expansion turbine 65 for cathode offgas from fuel cell process, the expansion turbine 66 for offgas from hydrogen purification process, the expansion turbine 67 for high pressured hydrogen gas, the first compressor 41 for generated gas, the second compressor 48 for generated gas, the compressor 63 for oxygen and the blower 64 for circulation of cathode offgas are connected to a motor M through gears G. By this connection, power generated in a plurality of expansion turbines is not wasteful, and is effectively utilized. In order to reduce compressive stress exerted on the shaft, the turbines and the compressors are arranged in order of degree of power so that the equipment requiring the larger power is nearer to the motor M. Further, gears for adjusting the rotational speed may be provided between the turbine and the compressor. Further, the turbines and the compressors are not necessary to be arranged as shown in FIG. 15, and if necessary, each of the turbines and each of the compressors may be independently arranged.

As described above, according to the present invention, when hydrogen is generated from combustible organic wastes and electric power is generated by a fuel cell, high-temperature heat generated in the processes is recovered as sensible heat or chemical energy, and the recovered sensible heat or chemical energy is utilized heat for pyrolysis, and latent heat of steam is effectively utilized for hydrogen purification, or $CO_2$ concentration, and also power is recovered from pressure energy. Thus, according to the present invention, there is provided a material treatment system in which energy held by combustible materials can be effectively utilized as much as possible, optimum combination of unit processes can be conducted, and exergy loss can be reduced and stuck is not necessary.

## Industrial Applicability

The present invention is preferably used for a technology, for recovering chemical energy of wastes or combustibles such as coal at a high efficiency, in which various wastes or combustibles are treated to reduce their volume, without combusting the wastes or the combustibles completely or incinerating the wastes or the combustibles, by a step such as pyrolysis, partial combustion or gasification reaction for thereby generating heat and utilizing the generated heat effectively, and producing gas having a high utility value.

1. A method for gasifying material, comprising:

a gasification process for pyrolyzing or gasifying material to produce gas;
a sensible heat recovery process for recovering sensible heat of said gas produced in said gasification process; and
a supply process for supplying said sensible heat recovered in said sensible heat recovery process to said gasification process.

2. A method for utilizing sensible heat in a gasification system, comprising:

a gasification process for pyrolyzing or gasifying material to produced gas;
a sensible heat recovery process for recovering sensible heat of said gas produced in said gasification process; and
a converting process for converting said sensible heat recovered in said sensible heat recovery process into power which is utilized within said gasification system.

3. An electric generating system by gasification for generating fuel gas from organic wastes and generating electricity by utilizing said fuel gas in a fuel cell, the electric generating system comprising:

a low-temperature gasification process for pyrolyzing and gasifying said organic wastes by partial combustion of said organic wastes at a temperature ranging from 400 to 1,000°C;
a high-temperature gasification process for gasifying gaseous material containing solid obtained by said low-temperature gasification process at a temperature ranging from 1,200 to 1,500°C to produce gas; and
a high-temperature sensible heat recovery process provided downstream of said high-temperature gasification process for conducting heat exchange between said gas produced in said high-temperature gasification process and having a temperature of 1,000°C or higher, and a gasifying agent for at least one of said low-temperature gasification process and said high-temperature gasification process to recover high-temperature sensible heat for thereby preheating said gasifying agent at a temperature of 600°C or higher.

4. An electric generating system by gasification according to claim 3, further comprising:

a gas cleaning process provided downstream of said high-temperature sensible heat recovery process for cleaning and removing dust or acid gas in said produced gas;

a gas pressurizing process for pressurizing said produced gas; and
a separating process for separating moisture contained in said produced gas after said gas pressurizing process to obtain water vapor, and utilizing said water vapor as said gasifying agent for at least one of said low-temperature gasification process and said high-temperature gasification process.

5. An electric generating system by gasification according to claim 3, further comprising:

a medium-temperature sensible heat recovery process provided downstream of said high-temperature sensible heat recovery process for recovering heat from said produced gas having a temperature ranging from 200 to 650°C;
a gas cleaning process provided downstream of said medium-temperature sensible heat recovery process for cleaning and removing dust or acid gas in said produced gas; and
a gas pressurizing process for pressurizing said produced gas;

wherein moisture contained in said produced gas after said gas pressurizing process is condensed in a gas cooler and the condensed water is introduced into said medium-temperature sensible heat recovery process to produce steam by heat exchange between said condensed water and said produced gas, and said produced steam is utilized as a gasifying agent for at least one of said low-temperature gasification process and said high-temperature gasification process.

6. An electric generating system by gasification for generating fuel gas from organic wastes and generating electricity by utilizing said fuel gas in a fuel cell, the electric generating system comprising:

a low-temperature gasification process for pyrolyzing and gasifying said organic wastes by partial combustion of said organic wastes at a temperature ranging from 400 to 1,000°C;
a high-temperature gasification process for gasifying gaseous material containing solid obtained by said low-temperature gasification process at a temperature ranging from 1,200 to 1,500°C to produce gas; and
a high-temperature sensible heat recovery process provided downstream of said high-temperature gasification process for conducting endothermic chemical reaction to recover high-temperature sensible heat of said produced gas discharged from said high-temperature gasification process and having a temperature of 1,000°C or higher, and utilizing substance obtained by said endothermic chemical reaction for heat of pyrolysis in said low-temperature gasification process or for gas purification.

7. An electric generating system by gasification according to claim 6, wherein said endothermic chemical reaction is decarbonation reaction of limestone.

8. An electric generating system by gasification according to claim 6 or 7, further comprising a dry-type gas cleaning process provided downstream of said high-temperature sensible heat recovery process for cleaning said produced gas by a cleaning agent, said cleaning agent comprising said substance produced in said endothermic chemical reaction.

9. An electric generating system by gasification for generating fuel gas from organic wastes and generating electricity by utilizing said fuel gas in a fuel cell, the electric generating system comprising:

a gasification process for gasifying said organic wastes to produce gas;
a gas purifying process for purifying said gas produced in said gasification process;
a boiler process for generating steam by recovering sensible heat of said produced gas; and
a gas pressurizing process for pressurizing said produced gas to a pressure ranging from 2 to 10 bar and supplying said pressurized gas to said gas purifying process;

wherein at least a part of pressure energy of said steam produced in said boiler process is utilized for power in said gas pressurizing process.

10. An electric generating system by gasification for generating fuel gas from organic wastes and generating electricity by utilizing said fuel gas in a fuel cell, the electric generating system comprising:

a gasification process for gasifying said organic wastes to produce gas;
a gas purifying process for purifying said gas produced in said gasification process; and

a carbon dioxide absorbing process as a part of said gas purifying process for removing carbon dioxide by amine, latent heat of vaporization of exhaust discharged from a steam turbine being utilized for power in said carbon dioxide absorbing process.

11. An electric generating system by gasification for generating fuel gas from organic wastes and generating electricity by utilizing said fuel gas in a fuel cell, the electric generating system comprising:

a gasification process for gasifying said organic wastes to produce gas;
a gas purifying process for purifying said gas produced in said gasification process;
a hydrogen purifying process as a part of said gas purifying process for purifying hydrogen by hydrogen absorbing alloy, offgas discharged from said hydrogen purifying process being utilized as a diluent of oxygen supplied to said gasification process.

12. An electric generating system by gasification for generating fuel gas from organic wastes and generating electricity by utilizing said fuel gas in a fuel cell, the electric generating system comprising:

a gasification process for gasifying said organic wastes to produce gas;
a gas purifying process for purifying said gas produced in said gasification process;
a gas pressurizing process as a part of said gas purifying process for pressurizing said produced gas; and
a hydrogen purifying process as a part of said gas purifying process for purifying hydrogen by hydrogen absorbing alloy;

wherein offgas discharged from said hydrogen purifying process and cathode offgas discharged from said fuel cell are introduced into an expansion turbine to generate power, and the generated power is utilized for compressing oxygen or oxygen-containing gas supplied to said fuel cell.

13. An electric generating system by gasification for generating fuel gas from organic wastes and generating electricity by utilizing said fuel gas in a fuel cell, the electric generating system comprising:

a gasification process for gasifying said organic wastes to produce gas;
a gas purifying process for purifying said gas produced in said gasification process;
a boiler process for generating steam by recovering sensible heat of said produced gas;
a gas pressurizing process for pressurizing said produced gas to a pressure ranging from 2 to 10 bar; and
a hydrogen purifying process as a part of said gas purifying process for purifying hydrogen by hydrogen absorbing alloy;

wherein at least a part of pressure energy of said steam produced in said boiler process is utilized as power for said gas pressurizing process, offgas discharged from said hydrogen purifying process and cathode offgas discharged from said fuel cell are introduced into an expansion turbine to generate power, and the generated power is utilized for compressing oxygen or oxygen-containing gas supplied to said fuel cell.

14. An electric generating system by gasification according to claim 13, said expansion turbine and a steam turbine used for generating said power for said gas pressurizing process are coaxial.

15. An electric generating system by gasification for generating fuel gas from organic wastes and generating electricity by utilizing said fuel gas in a fuel cell, the electric generating system comprising:

a gasification process for gasifying said organic wastes to produce gas;
a gas purifying process for purifying said gas produced in said gasification process;
a gas pressurizing process as a part of said gas purifying process for pressurizing said produced gas; and
a hydrogen purifying process as a part of said gas purifying process for purifying hydrogen by hydrogen absorbing alloy;

wherein high-pressure hydrogen gas obtained in said hydrogen purifying process is introduced into an expansion turbine to reduce pressure of said hydrogen gas and generate power, and the generated power is utilized for compressing oxygen or oxygen-containing gas supplied to said fuel cell.

16. An electric generating system by gasification for generating fuel gas from organic wastes and generating electricity by utilizing said fuel gas in a fuel cell, the electric generating system comprising:

a gasification process for gasifying said organic wastes to produce gas;
a gas purifying process for purifying said gas produced in said gasification process;
a boiler process for generating steam by recovering sensible heat of said produced gas;
a gas pressurizing process for pressurizing said produced gas to a pressure ranging from 2 to 10 bar and supplying said pressurized gas to said gas purifying process;
a hydrogen purifying process as a part of said gas purifying process for purifying hydrogen by hydrogen absorbing alloy;

wherein at least a part of pressure energy of said steam produced in said boiler process is utilized as power for said gas pressurizing process, high-temperature hydrogen gas obtained in said hydrogen purifying process is introduced into an expansion turbine to generate power, and the generated power is utilized for compressing oxygen or oxygen-containing gas supplied to said fuel cell.

17. An electric generating system by gasification according to claim 16, said expansion turbine and the steam turbine used for generating said power for said gas pressurizing process are coaxial.

18. An electric generating system by gasification for generating fuel gas from material and generating electricity by utilizing said fuel gas in a fuel cell, the electric generating system comprising:

a low-temperature gasification process for pyrolyzing and gasifying said material by partial combustion of said material at a temperature ranging from 400 to 1,000°C;
a high-temperature gasification process for gasifying gaseous material containing solid obtained by said low-temperature gasification process at a temperature ranging from 1,200 to 1,500°C to produce gas; and
a high-temperature sensible heat recovery process provided downstream of said high-temperature gasification process for conducting heat exchange between said gas produced in said high-temperature gasification process, and a gasifying agent for at least one of said low-temperature gasification process and said high-temperature gasification process to recover high-temperature sensible heat for thereby preheating said gasifying agent.

19. A method for gasifying material, comprising:

a low-temperature gasification process for pyrolyzing and gasifying said material by partial combustion of said material at a temperature ranging from 400 to 1,000°C;
a high-temperature gasification process for gasifying gaseous material containing solid obtained by said low-temperature gasification process at a temperature ranging from 1,200 to 1,500°C to produce gas; and
a heat recovery process provided downstream of said high-temperature gasification process for conducting heat exchange between said gas produced in said high-temperature gasification process, and a gasifying agent for at least one of said low-temperature gasification process and said high-temperature gasification process to recover heat for thereby preheating said gasifying agent.

20. A method for gasifying material, comprising:

a low-temperature gasification process for pyrolyzing and gasifying said material by partial combustion of said material at a temperature ranging from 400 to 1,000°C;
a high-temperature gasification process for gasifying gaseous material containing solid obtained by said low-temperature gasification process at a temperature ranging from 1,200 to 1,500°C to produce gas; and
a high-temperature sensible heat recovery process provided downstream of said high-temperature gasification process for conducting endothermic chemical reaction to recover high-temperature sensible heat of said produced gas discharged from said high-temperature gasification process and having a temperature of 1,000°C or higher, and utilizing substance obtained by said endothermic chemical reaction for heat of pyrolysis in said low-temperature gasification process or for gas purification.

21. An electric generating system by gasification for generating fuel gas from material and generating electricity by utilizing said fuel gas in a fuel cell, the electric generating system comprising:

a gasification process for gasifying said material to produce gas;

a gas purifying process for purifying said gas produced in said gasification process;
a boiler process for generating steam by recovering sensible heat of said produced gas; and
a gas pressurizing process for pressurizing said produced gas and supplying said pressurized gas to said gas purifying process;

wherein at least a part of pressure energy of said steam produced in said boiler process is utilized as power for said gas pressurizing process.

22. An electric generating system by gasification for generating fuel gas from material and generating electricity by utilizing said fuel gas in a fuel cell, the electric generating system comprising:

a gasification process for gasifying said material to produce gas;
a gas purifying process for purifying said gas produced in said gasification process;
a carbon dioxide absorbing process as a part of said gas purifying process for removing carbon dioxide by amine, latent heat of vaporization of exhaust discharged from a steam turbine being utilized for power of said carbon dioxide absorbing process.

23. An electric generating system by gasification for generating fuel gas from material and generating electricity by utilizing said fuel gas in a fuel cell, the electric generating system comprising:

a gasification process for gasifying said material to produce gas;
a gas purifying process for purifying said gas produced in said gasification process; and
a hydrogen purifying process as a part of said gas purifying process for purifying hydrogen by hydrogen absorbing alloy, offgas discharged from said hydrogen purifying process being utilized as a diluent of oxygen supplied to said gasification process.

24. An electric generating system by gasification for generating fuel gas from material and generating electricity by utilizing said fuel gas in a fuel cell, the electric generating system comprising:

a gasification process for gasifying said material to produce gas;
a gas purifying process for purifying said gas produced in said gasification process;
a gas pressurizing process as a part of said gas purifying process for pressurizing said produced gas; and
a hydrogen purifying process as a part of said gas purifying process for purifying hydrogen by hydrogen absorbing alloy;

wherein offgas discharged from said hydrogen purifying process and cathode offgas discharged from said fuel cell are introduced into an expansion turbine to generate power, and the generated power is utilized for compressing oxygen or oxygen-containing gas supplied to said fuel cell.

25. An electric generating system by gasification for generating fuel gas from material and generating electricity by utilizing said fuel gas in a fuel cell, the electric generating system comprising:

a gasification process for gasifying said material to produce gas;
a gas purifying process for purifying said gas produced in said gasification process;
a gas pressurizing process as a part of said gas purifying process for pressurizing said produced gas; and
a hydrogen purifying process as a part of said gas purifying process for purifying hydrogen by hydrogen absorbing alloy;

wherein high-pressure hydrogen gas obtained in said hydrogen purifying process is introduced into an expansion turbine to reduce pressure of said hydrogen gas and generate power, and the generated power is utilized for compressing oxygen or oxygen-containing gas supplied to said fuel cell.

## Claims

**1.** An electric generating system by gasification for generating fuel gas from organic wastes and generating electricity by utilizing said fuel gas in a fuel cell, the electric generating system comprising:

a low-temperature gasification process for pyrolyzing and gasifying said organic wastes by partial combustion of said organic wastes at a temperature ranging from 400 to 1,000°C;
a high-temperature gasification process for gasifying gaseous material containing solid obtained by said low-temperature gasification process at a temperature ranging from 1,200 to 1,500°C to produce gas; and
a high-temperature sensible heat recovery process provided downstream of said high-temperature gasification process for conducting heat exchange between said gas produced in said high-temperature gasification process and having a temperature of 1,000°C or higher, and a gasifying agent for at least one of said low-temperature gasification process and said high-temperature gasification process to recover high-temperature sensible heat for thereby preheating said gasifying agent at a temperature of 600°C or higher.

**2.** An electric generating system by gasification according to claim 1, further comprising:

a gas cleaning process provided downstream of said high-temperature sensible heat recovery process for cleaning and removing dust or acid gas in said produced gas;
a gas pressurizing process for pressurizing said produced gas; and
a separating process for separating moisture contained in said produced gas after said gas pressurizing process to obtain water vapor, and utilizing said water vapor as said gasifying agent for at least one of said low-temperature gasification process and said high-temperature gasification process.

**3.** An electric generating system by gasification according to claim 1, further comprising:

a medium-temperature sensible heat recovery process provided downstream of said high-temperature sensible heat recovery process for recovering heat from said produced gas having a temperature ranging from 200 to 650°C;
a gas cleaning process provided downstream of said medium-temperature sensible heat recovery process for cleaning and removing dust or acid gas in said produced gas; and
a gas pressurizing process for pressurizing said produced gas;

wherein moisture contained in said produced gas after said gas pressurizing process is condensed in a gas cooler and the condensed water is introduced into said medium-temperature sensible heat recovery process to produce steam by heat exchange between said condensed water and said produced gas, and said produced steam is utilized as a gasifying agent for at least one of said low-temperature gasification process and said high-temperature gasification process.

**4.** An electric generating system by gasification for generating fuel gas from organic wastes and generating electricity by utilizing said fuel gas in a fuel cell, the electric generating system comprising:

a low-temperature gasification process for pyrolyzing and gasifying said organic wastes by partial combustion of said organic wastes at a temperature ranging from 400 to 1,000°C;
a high-temperature gasification process for gasifying gaseous material containing solid obtained by said low-temperature gasification process at a temperature ranging from 1,200 to 1,500°C to produce gas; and
a high-temperature sensible heat recovery process provided downstream of said high-temperature gasification process for conducting endothermic chemical reaction to recover high-temperature sensible heat of said produced gas discharged from said high-temperature gasification process and having a temperature of 1,000°C or higher, and utilizing substance obtained by said endothermic chemical reaction for heat of pyrolysis in said low-temperature gasification process or for gas purification.

**5.** An electric generating system by gasification according to claim 4 wherein said endothermic chemical reaction is decarbonation reaction of limestone.

**6.** An electric generating system by gasification according to claim 4 or 5 , further comprising a dry-type gas cleaning process provided downstream of said high-temperature sensible heat recovery process for cleaning said produced gas by a cleaning agent, said cleaning agent comprising said substance produced in said endothermic chemical reaction.

**7.** An electric generating system by gasification for generating fuel gas from organic wastes and generating electricity by utilizing said fuel gas in a fuel cell, the electric generating system comprising:

a gasification process for gasifying said organic wastes to produce gas;
a gas purifying process for purifying said gas produced in said gasification process;
a boiler process for generating steam by recovering sensible heat of said produced gas; and
a gas pressurizing process for pressurizing said produced gas to a pressure ranging from 2 to 10 bar and supplying said pressurized gas to said gas purifying process;

wherein at least a part of pressure energy of said steam produced in said boiler process is utilized for power in said gas pressurizing process.

**8.** An electric generating system by gasification for generating fuel gas from organic wastes and generating electricity by utilizing said fuel gas in a fuel cell, the electric generating system comprising:

a gasification process for gasifying said organic wastes to produce gas;
a gas purifying process for purifying said gas produced in said gasification process; and
a carbon dioxide absorbing process as a part of said gas purifying process for removing carbon dioxide by amine, latent heat of vaporization of exhaust discharged from a steam turbine being utilized for power in said carbon dioxide absorbing process.

**9.** An electric generating system by gasification for generating fuel gas from organic wastes and generating electricity by utilizing said fuel gas in a fuel cell, the electric generating system comprising:

a gasification process for gasifying said organic wastes to produce gas;
a gas purifying process for purifying said gas produced in said gasification process;
a hydrogen purifying process as a part of said gas purifying process for purifying hydrogen by hydrogen absorbing alloy, offgas discharged from said hydrogen purifying process being utilized as a diluent of oxygen supplied to said gasification process.

**10.** An electric generating system by gasification for generating fuel gas from organic wastes and generating electricity by utilizing said fuel gas in a fuel cell, the electric generating system comprising:

a gasification process for gasifying said organic wastes to produce gas;
a gas purifying process for purifying said gas produced in said gasification process;
a gas pressurizing process as a part of said gas purifying process for pressurizing said produced gas; and
a hydrogen purifying process as a part of said gas purifying process for purifying hydrogen by hydrogen absorbing alloy;

wherein offgas discharged from said hydrogen purifying process and cathode offgas discharged from said fuel cell are introduced into an expansion turbine to generate power, and the generated power is utilized for compressing oxygen or oxygen-containing gas supplied to said fuel cell.

**11.** An electric generating system by gasification for generating fuel gas from organic wastes and generating electricity by utilizing said fuel gas in a fuel cell, the electric generating system comprising:

a gasification process for gasifying said organic wastes to produce gas;
a gas purifying process for purifying said gas produced in said gasification process;
a boiler process for generating steam by recovering sensible heat of said produced gas;
a gas pressurizing process for pressurizing said produced gas to a pressure ranging from 2 to 10 bar; and
a hydrogen purifying process as a part of said gas purifying process for purifying hydrogen by hydrogen absorbing alloy;

wherein at least a part of pressure energy of said steam produced in said boiler process is utilized as power for said gas pressurizing process, offgas discharged from said hydrogen purifying process and cathode offgas discharged from said fuel cell are introduced into an expansion turbine to generate power, and the generated power is utilized for compressing oxygen or oxygen-containing gas supplied to said fuel cell.

**12.** , An electric generating system by gasification according to claim 11 , said expansion turbine and a steam turbine used for generating said power for said gas pressurizing process are coaxial.

**13.** An electric generating system by gas ification for generating fuel gas from organic wastes and generating electricity by utilizing said fuel gas in a fuel cell, the electric generating system comprising:

a gasification process for gasifying said organic wastes to produce gas;
a gas purifying process for purifying said gas produced in said gasification process;
a gas pressurizing process as a part of said gas purifying process for pressurizing said produced gas; and
a hydrogen purifying process as a part of said gas purifying process for purifying hydrogen by hydrogen absorbing alloy;

wherein high-pressure hydrogen gas obtained in said hydrogen purifying process is introduced into an expansion turbine to reduce pressure of said hydrogen gas and generate power, and the generated power is utilized for compressing oxygen or oxygen-containing gas supplied to said fuel cell.

**14.** An electric generating system by gasification for generating fuel gas from organic wastes and generating electricity by utilizing said fuel gas in a fuel cell, the electric generating system comprising:

a gasification process for gasifying said organic wastes to produce gas;
a gas purifying process for purifying said gas produced in said gasification process;
a boiler process for generating steam by recovering sensible heat of said produced gas;
a gas pressurizing process for pressurizing said produced gas to a pressure ranging from 2 to 10 bar and supplying said pressurized gas to said gas purifying process;
a hydrogen purifying process as a part of said gas purifying process for purifying hydrogen by hydrogen absorbing alloy;

wherein at least a part of pressure energy of said steam produced in said boiler process is utilized as power for said gas pressurizing process, high-temperature hydrogen gas obtained in said hydrogen purifying process is introduced into an expansion turbine to generate power, and the generated power is utilized for compressing oxygen or oxygen-containing gas supplied to said fuel cell.

**15.** An electric generating system by gasification according to claim 14, said expansion turbine and the steam turbine used for generating said power for said gas pressurizing process are coaxial.

**16.** An electric generating system by gasification for generating fuel gas from material and generating electricity by utilizing said fuel gas in a fuel cell, the electric generating system comprising:

a low-temperature gasification process for pyrolyzing and gasifying said material by partial combustion of said material at a temperature ranging from 400 to 1,000°C;
a high-temperature gasification process for gasifying gaseous material containing solid obtained by said low-temperature gasification process at a temperature ranging from 1,200 to 1,500°C to produce gas; and
a high-temperature sensible heat recovery process provided downstream of said high-temperature gasification process for conducting heat exchange between said gas produced in said high-temperature gasification process, and a gasifying agent for at least one of said low-temperature gasification process and said high-temperature gasification process to recover high-temperature sensible heat for thereby preheating said gasifying agent.

**17.** A method for gasifying material, comprising:

a low-temperature gasification process for pyrolyzing and gasifying said material by partial combustion of said material at a temperature ranging from 400 to 1,000°C;
a high-temperature gasification process for gasifying gaseous material containing solid obtained by said low-temperature gasification process at a temperature ranging from 1,200 to 1,500°C to produce gas; and
a high-temperature sensible heat recovery process provided downstream of said high-temperature gasification process for conducting endothermic chemical reaction to recover high-temperature sensible heat of said produced gas discharged from said high-temperature gasification process and having a temperature of 1,000°C or higher, and utilizing substance obtained by said endothermic chemical reaction for heat of pyrolysis in said low-temperature gasification process or for gas purification.

**18.** An electric generating system by gasification for generating fuel gas from material and generating electricity by utilizing said fuel gas in a fuel cell, the electric generating system comprising:

a gasification process for gasifying said material to produce gas;
a gas purifying process for purifying said gas produced in said gasification process;
a boiler process for generating steam by recovering sensible heat of said produced gas; and
a gas pressurizing process for pressurizing said produced gas and supplying said pressurized gas to said gas purifying process;

wherein at least a part of pressure energy of said steam produced in said boiler process is utilized as power for said gas pressurizing process.

**19.** An electric generating system by gasification for generating fuel gas from material and generating electricity by utilizing said fuel gas in a fuel cell, the electric generating system comprising:

a gasification process for gasifying said material to produce gas;
a gas purifying process for purifying said gas produced in said gasification process;
a carbon dioxide absorbing process as a part of said gas purifying process for removing carbon dioxide by amine, latent heat of vaporization of exhaust discharged from a steam turbine being utilized for power of said carbon dioxide absorbing process.

**20.** An electric generating system by gasification for generating fuel gas from material and generating electricity by utilizing said fuel gas in a fuel cell, the electric generating system comprising:

a gasification process for gasifying said material to produce gas;
a gas purifying process for purifying said gas produced in said gasification process; and
a hydrogen purifying process as a part of said gas purifying process for purifying hydrogen by hydrogen absorbing alloy, offgas discharged from said hydrogen purifying process being utilized as a diluent of oxygen supplied to said gasification process.

**21.** An electric generating system by gasification for generating fuel gas from material and generating electricity by utilizing said fuel gas in a fuel cell, the electric generating system comprising:

a gasification process for gasifying said material to produce gas;
a gas purifying process for purifying said gas produced in said gasification process;
a gas pressurizing process as a part of said gas purifying process for pressurizing said produced gas; and
a hydrogen purifying process as a part of said gas purifying process for purifying hydrogen by hydrogen absorbing alloy;

wherein offgas discharged from said hydrogen purifying process and cathode offgas discharged from said fuel cell are introduced into an expansion turbine to generate power, and the generated power is utilized for compressing oxygen or oxygen-containing gas supplied to said fuel cell.

**22.** An electric generating system by gasification for generating fuel gas from material and generating electricity by utilizing said fuel gas in a fuel cell, the electric generating system comprising:

a gasification process for gasifying said material to produce gas;
a gas purifying process for purifying said gas produced in said gasification process;
a gas pressurizing process as a part of said gas purifying process for pressurizing said produced gas; and
a hydrogen purifying process as a part of said gas purifying process for purifying hydrogen by hydrogen absorbing alloy;

wherein high-pressure hydrogen gas obtained in said hydrogen purifying process is introduced into an expansion turbine to reduce pressure of said hydrogen gas and generate power, and the generated power is utilized for compressing oxygen or oxygen-containing gas supplied to said fuel cell.

F/G. 1

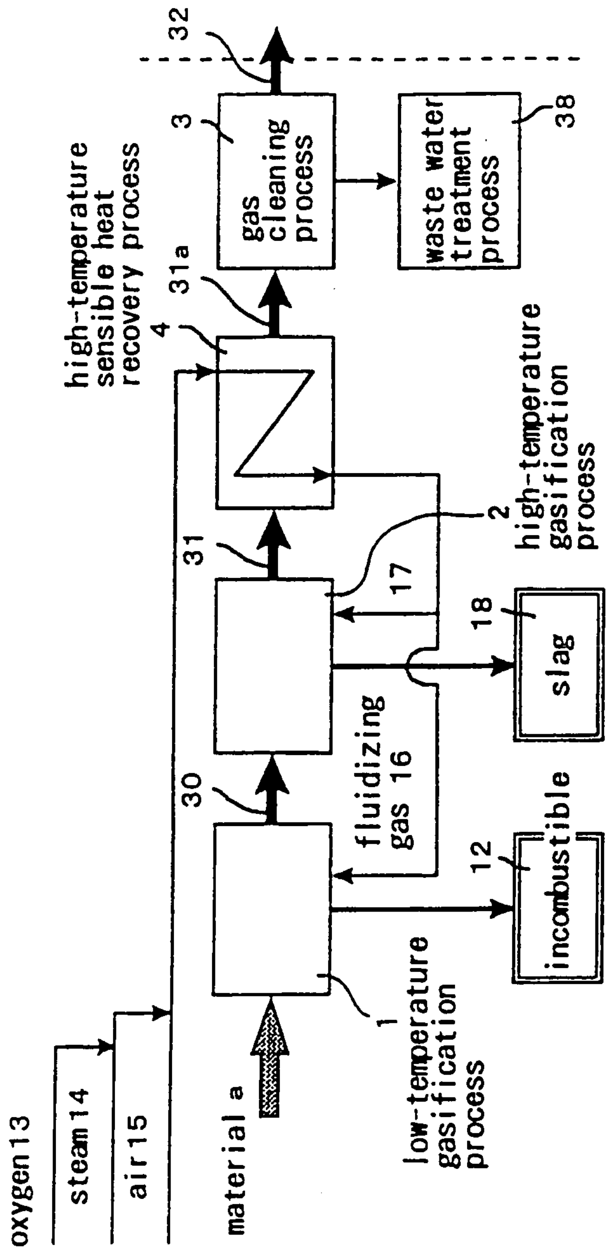
oxygen13
steam14
air15
material a
low-temperature gasification process
1
30
incombustible
12
fluidizing gas 16
31
slag
18
17
2
high-temperature gasification process
4
high-temperature sensible heat recovery process
31a
3
gas cleaning process
waste water treatment process
38
32

FIG. 2

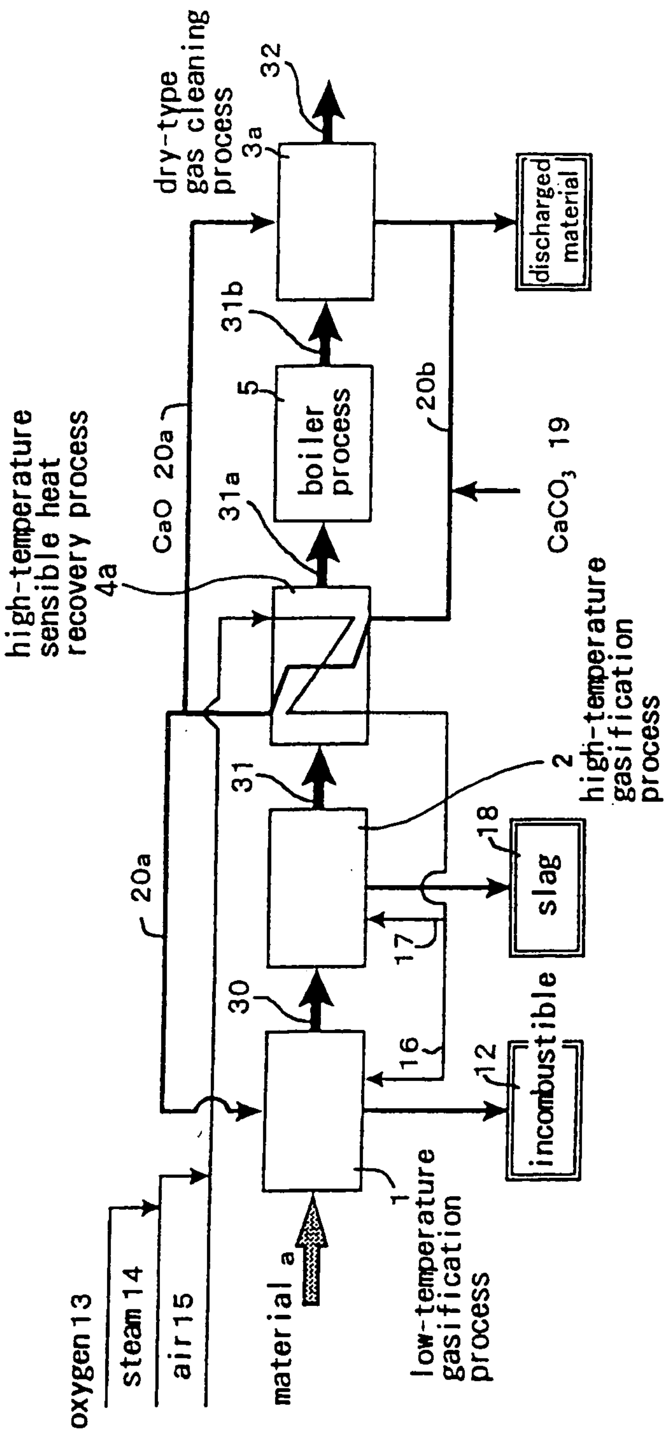
oxygen 13
steam 14
air 15
material a
low-temperature gasification process
1
incombustible
12
16
30
20a
17
slag
18
31
2
high-temperature gasification process
high-temperature sensible heat recovery process
4a
CaO 20a
31a
boiler process
5
CaCO$_3$ 19
20b
31b
dry-type gas cleaning process
3a
32
discharged material

FIG. 3

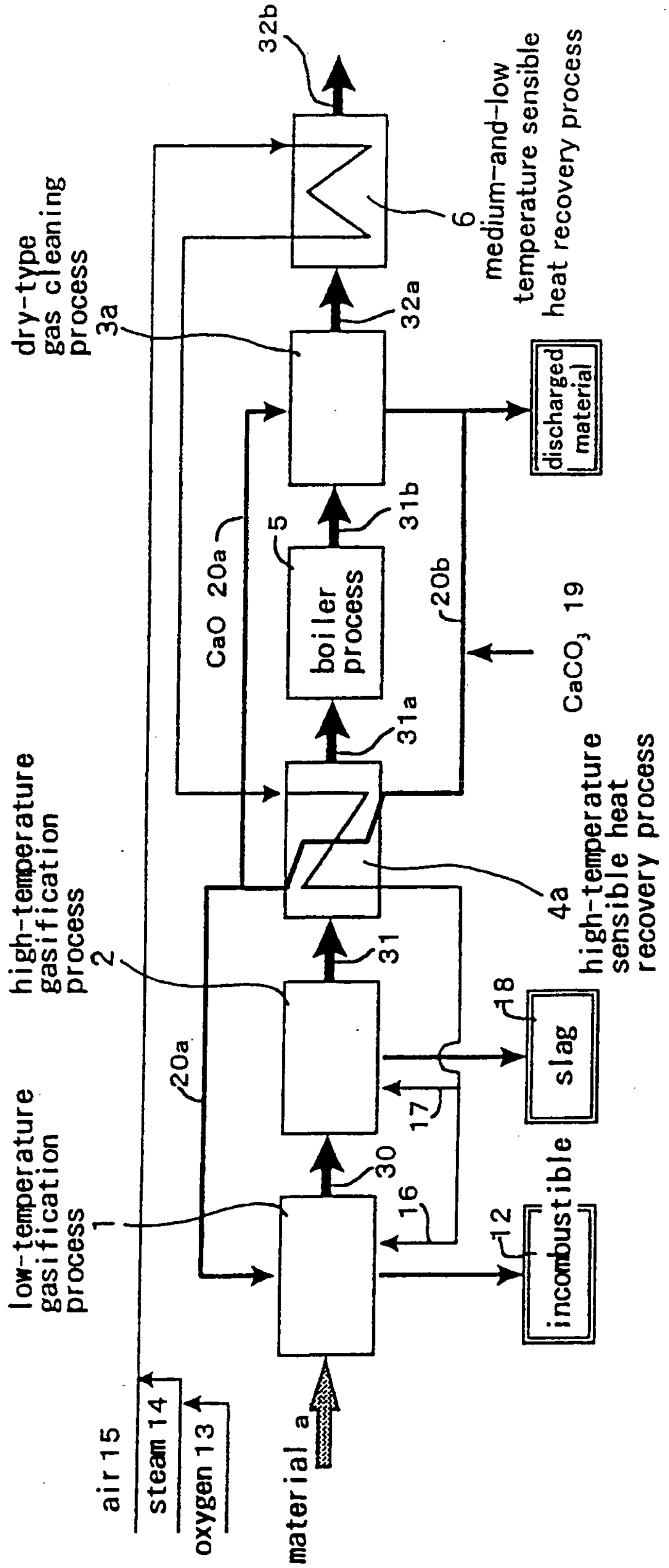
low-temperature gasification process
1
high-temperature gasification process
2
dry-type gas cleaning process
3a
4a
high-temperature sensible heat recovery process
5
boiler process
6
medium-and-low temperature sensible heat recovery process
20a
CaO 20a
20b
$CaCO_3$ 19
30
31
31a
31b
32a
32b
16
17
12
incombustible
18
slag
discharged material
air 15
steam 14
oxygen 13
material a

F I G. 4

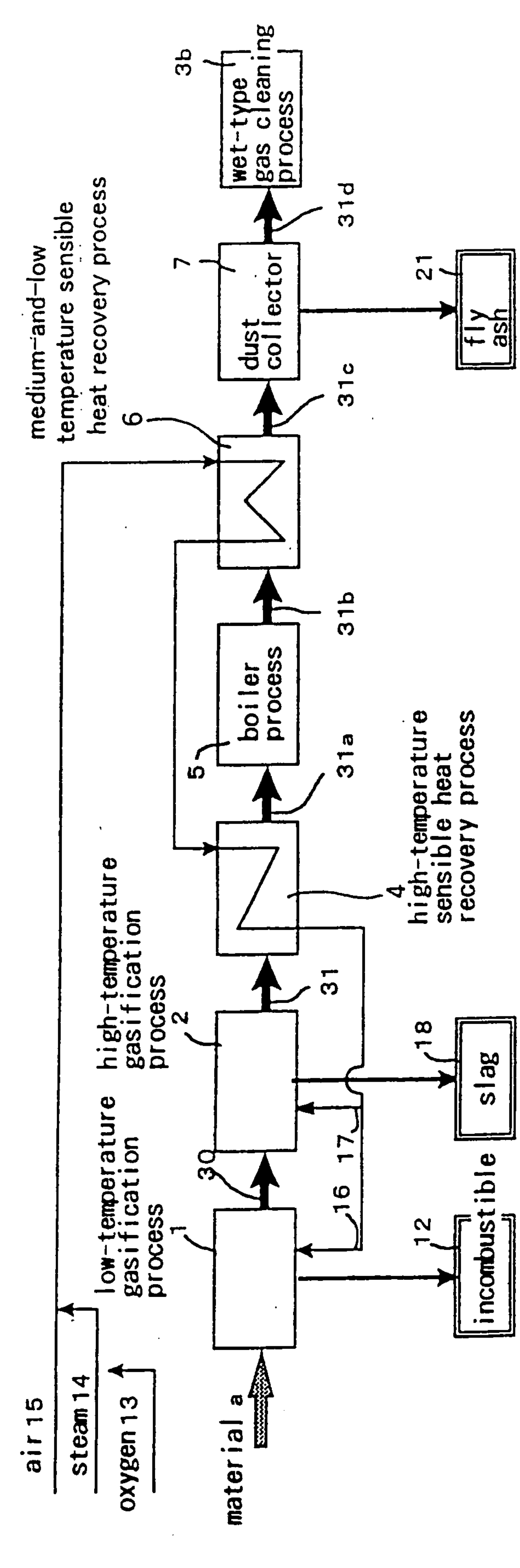
air15
steam14
oxygen13
material a
low-temperature gasification process
1
30
16
17
high-temperature gasification process
2
31
incombustible
12
slag
18
4
high-temperature sensible heat recovery process
31a
5
boiler process
31b
6
medium-and-low temperature sensible heat recovery process
31c
7
dust collector
fly ash
21
31d
3b
wet-type gas cleaning process

FIG. 5

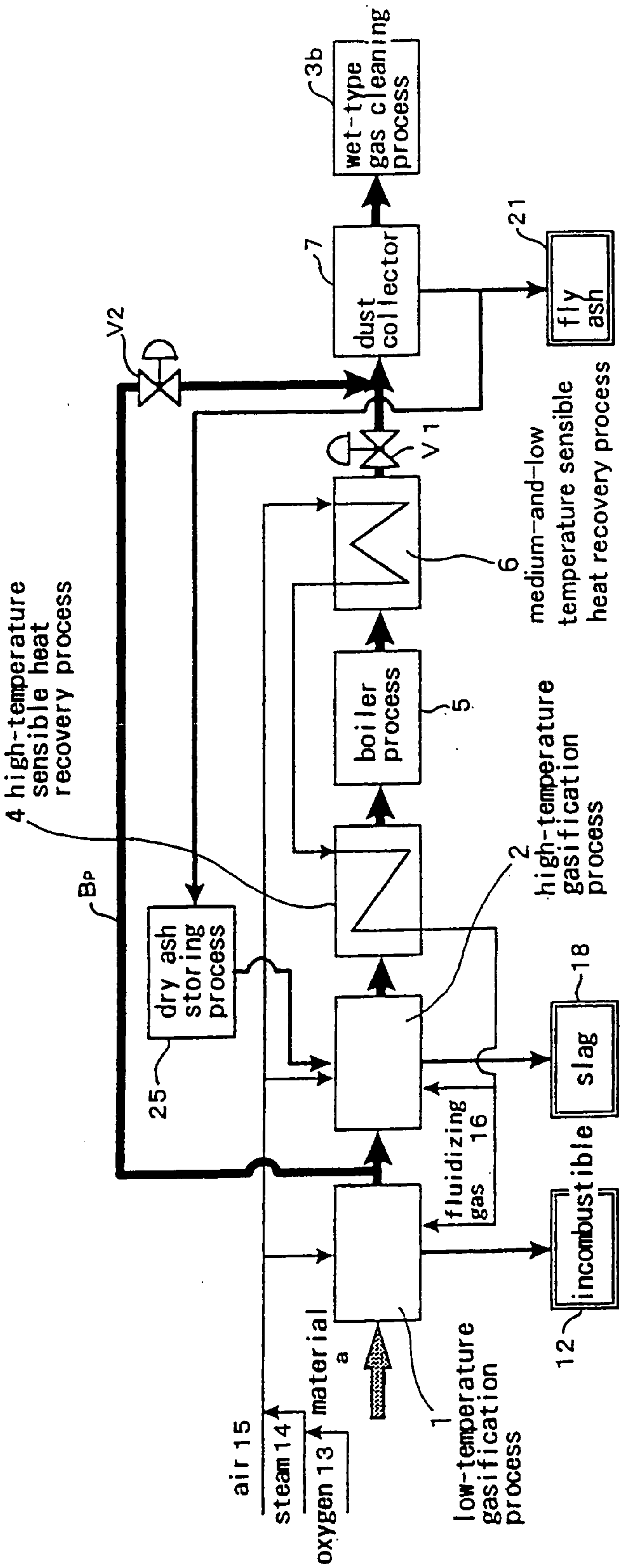

air 15
steam 14
oxygen 13
material a
1 low-temperature gasification process
12 incombustible
fluidizing gas 16
2 high-temperature gasification process
18 slag
25 dry ash storing process
Bp
4 high-temperature sensible heat recovery process
5 boiler process
6 medium-and-low temperature sensible heat recovery process
V1
V2
7 dust collector
21 fly ash
3b wet-type gas cleaning process

FIG. 6

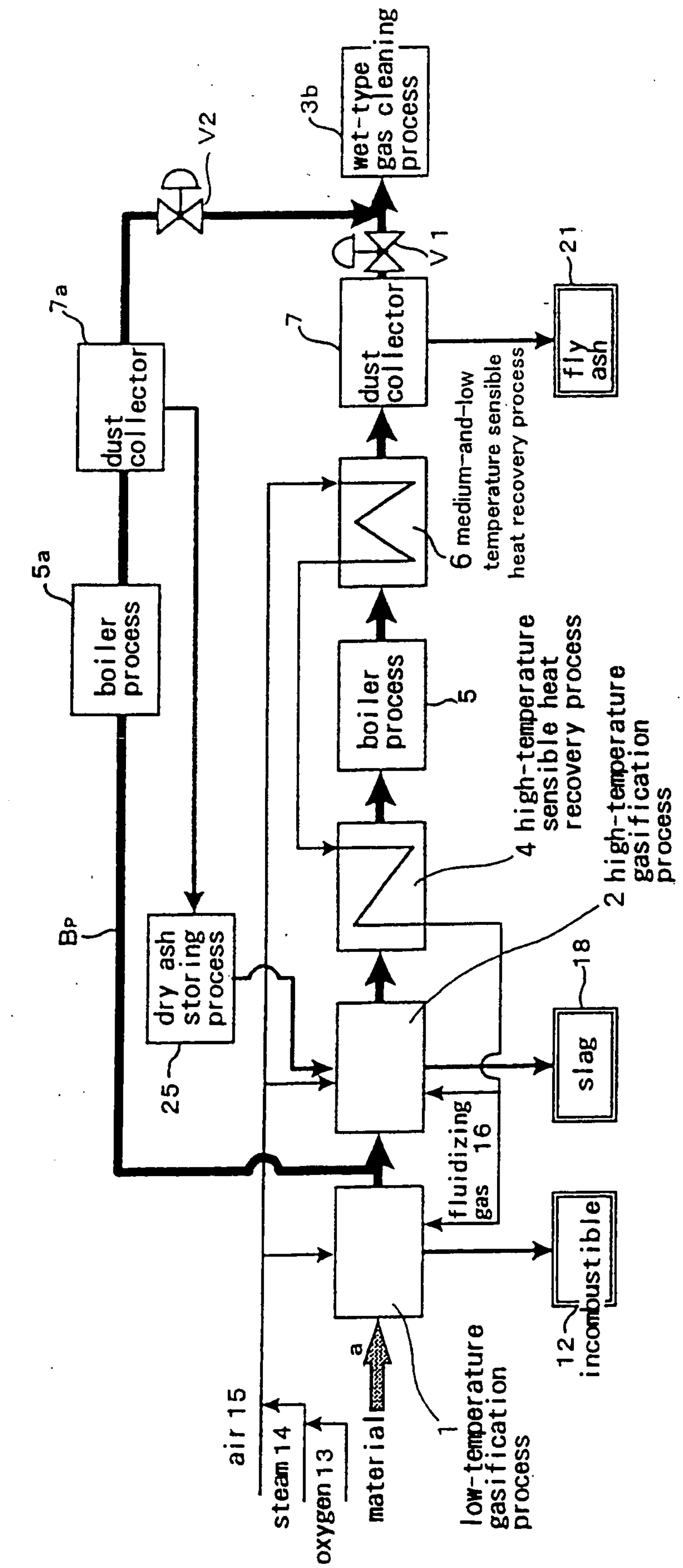
wet-type gas cleaning process
3b
V2
V1
7a
dust collector
7
dust collector
21
fly ash
5a
boiler process
6 medium-and-low temperature sensible heat recovery process
boiler process
5
4 high-temperature sensible heat recovery process
2 high-temperature gasification process
Bp
dry ash storing process
25
18
slag
fluidizing gas 16
incombustible
12
a
air 15
steam 14
oxygen 13
material
1
low-temperature gasification process

F I G. 7

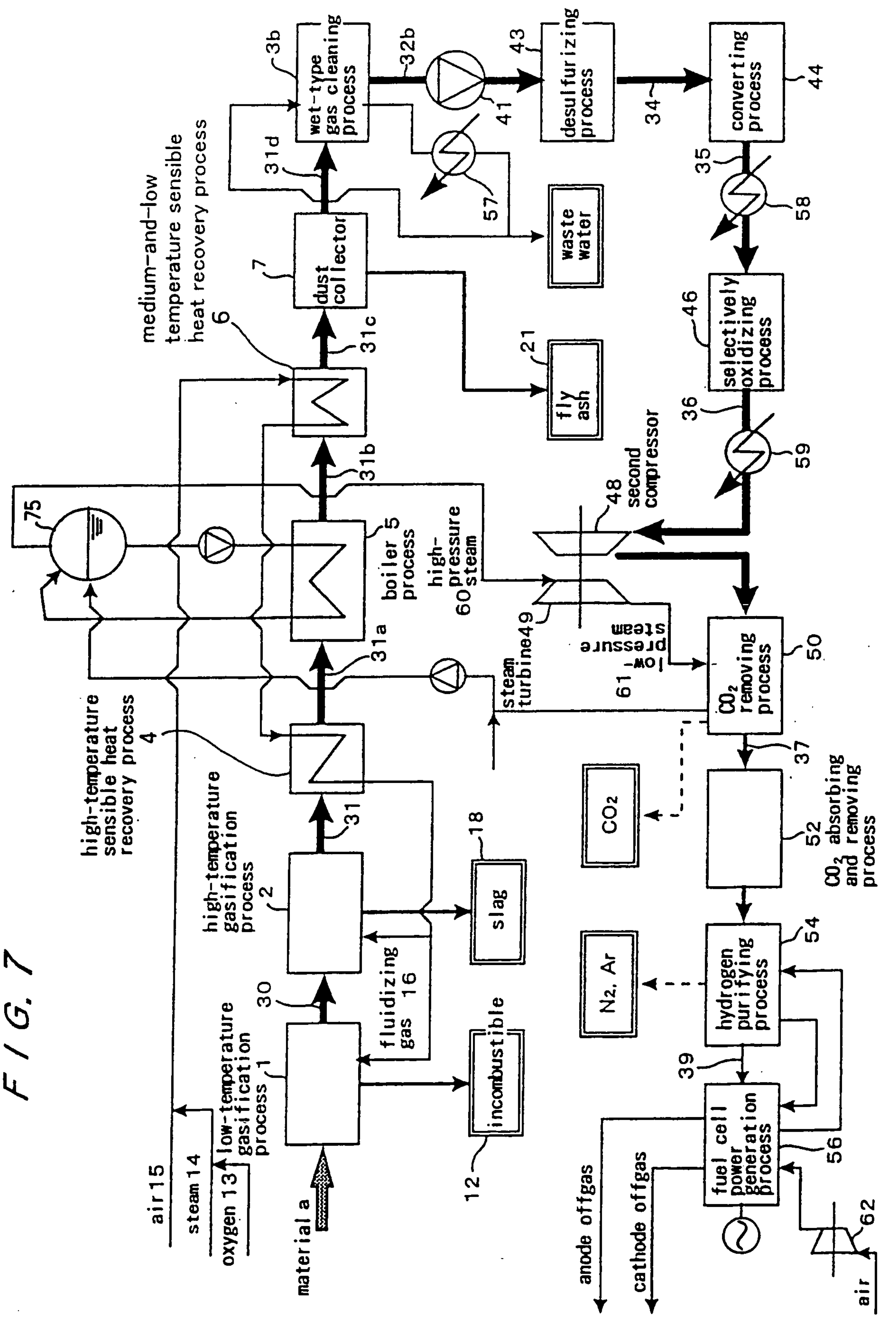

air 15
steam 14
oxygen 13
material a
low-temperature gasification process 1
12
incombustible
30
fluidizing gas 16
high-temperature gasification process 2
slag
18
31
high-temperature sensible heat recovery process 4
31a
boiler process 5
31b
6
31c
medium-and-low temperature sensible heat recovery process
dust collector
7
fly ash
21
31d
wet-type gas cleaning process
3b
32b
41
57
waste water
43
desulfurizing process
34
converting process
44
35
58
selectively oxidizing process
46
36
59
75
high-pressure steam
60
48
second compressor
steam turbine49
61
low-pressure steam
CO2 removing process
50
37
CO2
CO2 absorbing and removing process
52
N2, Ar
hydrogen purifying process
54
39
fuel cell power generation process
56
anode offgas
cathode offgas
air
62

F I G. 8

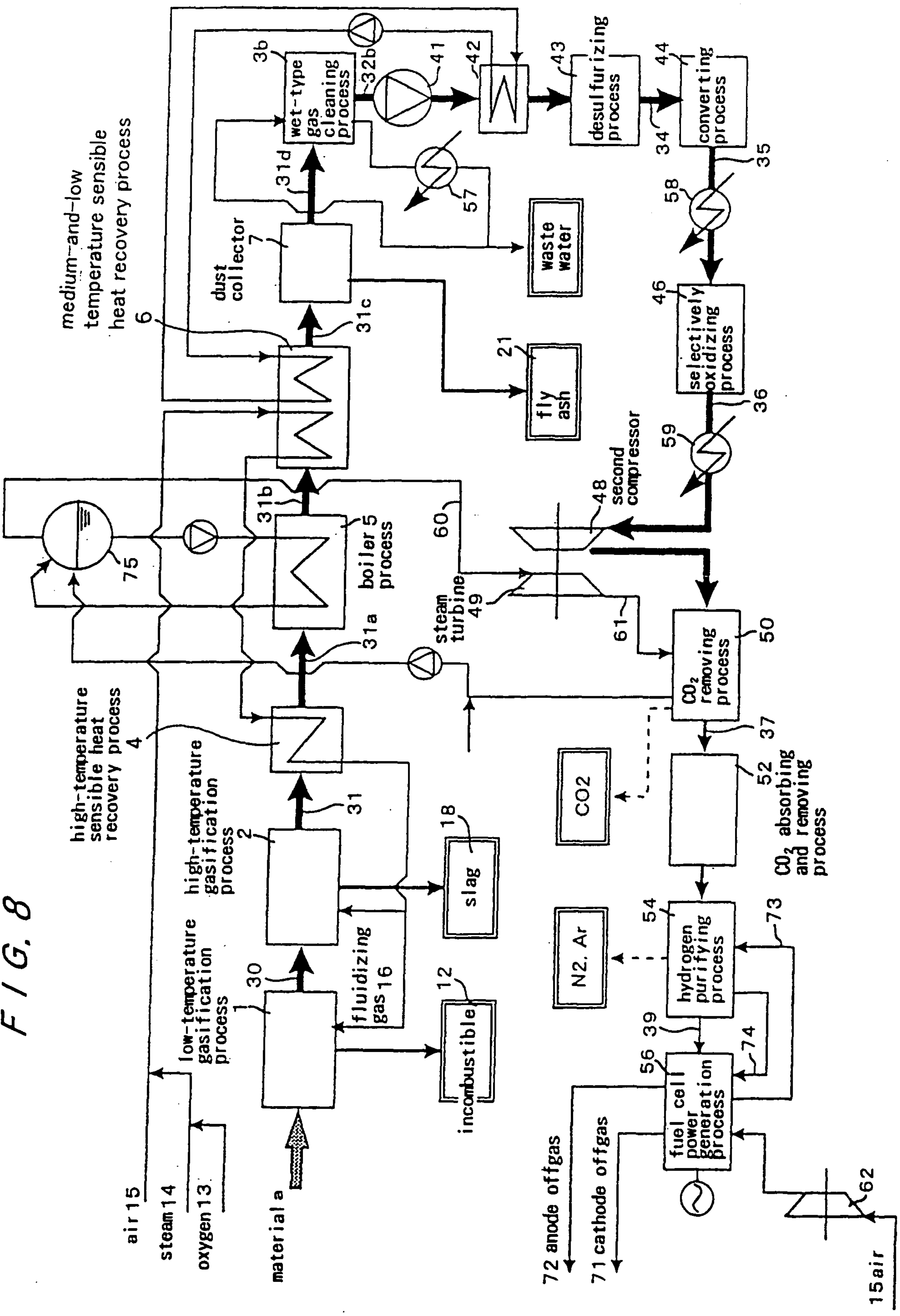

air 15
steam 14
oxygen 13
material a
low-temperature gasification process
1
30
fluidizing gas 16
12
incombustible
high-temperature gasification process
2
31
18
slag
high-temperature sensible heat recovery process
4
31a
boiler 5 process
31b
75
medium-and-low temperature sensible heat recovery process
6
31c
dust collector
7
21
fly ash
31d
wet-type gas cleaning process
3b
32b
41
42
57
waste water
43
desulfurizing process
34
44
converting process
35
58
46
selectively oxidizing process
36
59
48
second compressor
60
steam turbine
49
61
CO₂ removing process
50
37
CO2
52
CO₂ absorbing and removing process
54
hydrogen purifying process
N2, Ar
73
39
74
56
fuel cell power generation process
72 anode offgas
71 cathode offgas
62
15air

FIG. 9

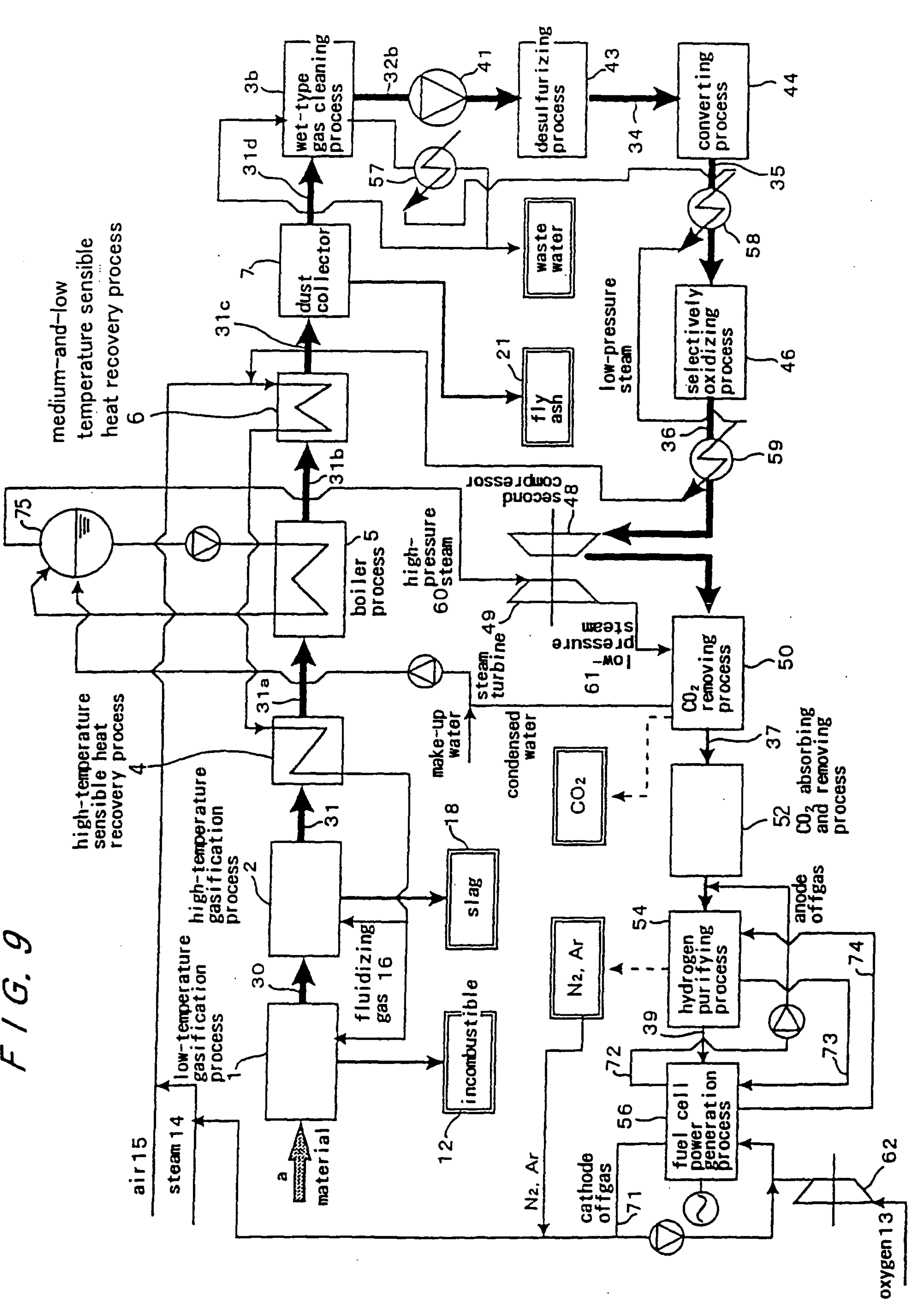
air 15
steam 14
a
material
low-temperature gasification process
1
12
incombustible
30
fluidizing gas 16
high-temperature gasification process
2
slag
18
31
high-temperature sensible heat recovery process
4
make-up water
condensed water
31a
steam turbine
49
boiler process
5
high-pressure steam
60
75
31b
medium-and-low temperature sensible heat recovery process
6
31c
fly ash
21
dust collector
7
31d
wet-type gas cleaning process
3b
32b
41
57
waste water
desulfurizing process
43
34
converting process
44
35
58
low-pressure steam
selectively oxidizing process
46
36
59
second compressor
48
low-pressure steam
61
CO2 removing process
50
37
CO2
CO2 absorbing and removing process
52
anode offgas
N2, Ar
hydrogen purifying process
54
39
72
73
74
fuel cell power generation process
56
cathode offgas
71
62
oxygen 13
N2, Ar

FIG. 10

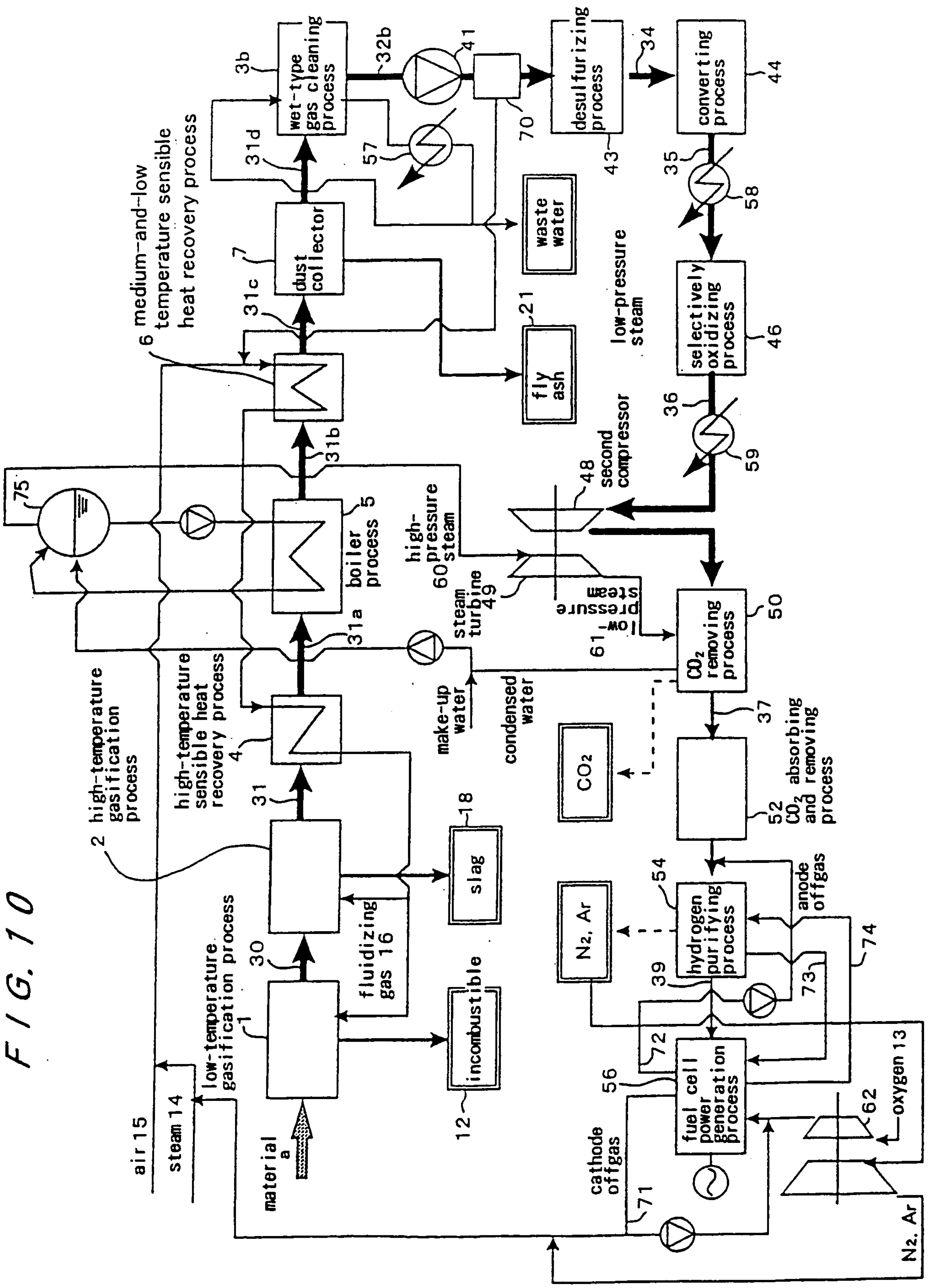
air 15
steam 14
material a
low-temperature gasification process
1
30
fluidizing gas 16
incombustible
12
2 high-temperature gasification process
31
slag
18
high-temperature sensible heat recovery process
4
31a
boiler process
5
31b
75
6 medium-and-low temperature sensible heat recovery process
31c
dust collector
7
fly ash
21
31d
wet-type gas cleaning process
3b
32b
41
57
waste water
70
desulfurizing process
43
34
converting process
44
35
58
low-pressure steam
selectively oxidizing process
46
36
59
second compressor
48
high-pressure steam
60
steam turbine
49
low-pressure steam
61
make-up water
condensed water
CO2 removing process
50
37
CO2
CO2 absorbing and removing process
52
N2, Ar
hydrogen purifying process
54
anode offgas
39
73
74
72
56
fuel cell power generation process
cathode offgas
71
62
oxygen 13
N2, Ar

FIG. 11

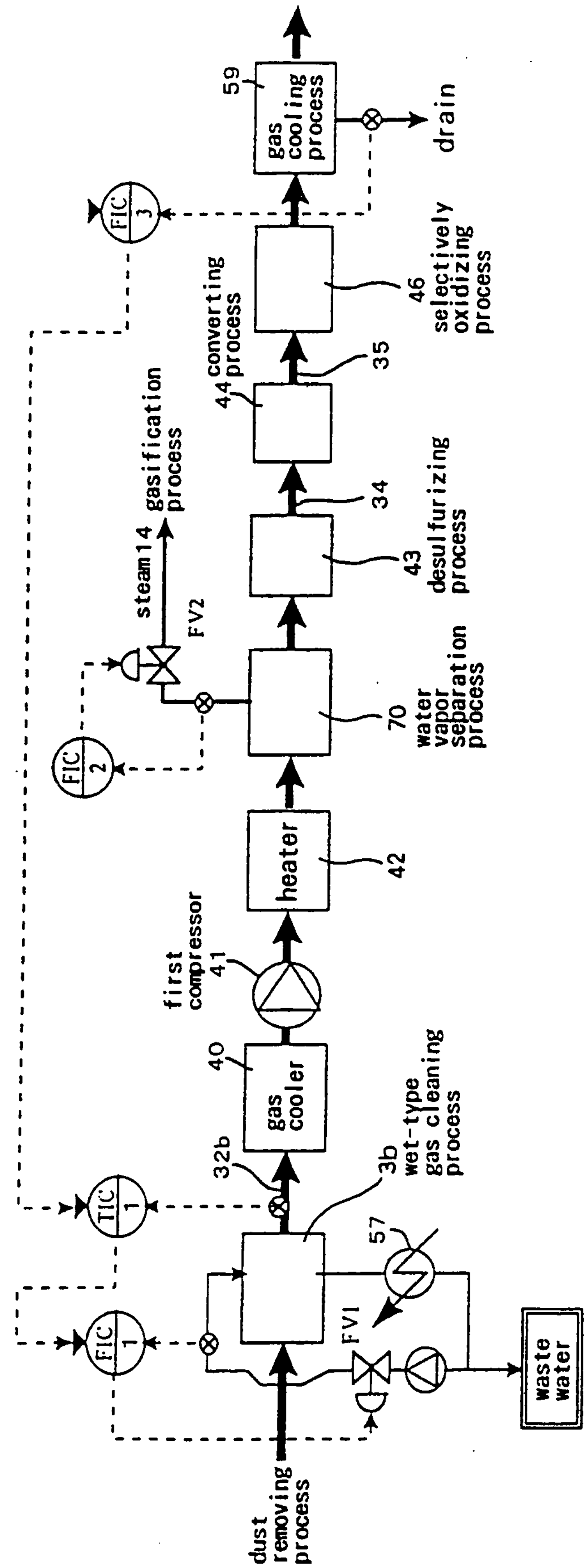
dust removing process
FIC 1
TIC 1
FV1
57
waste water
3b
wet-type gas cleaning process
32b
40
gas cooler
first compressor
41
heater
42
FIC 2
FV2
steam14
gasification process
70
water vapor separation process
43
desulfurizing process
34
44
converting process
35
46
selectively oxidizing process
FIC 3
59
gas cooling process
drain

*F I G. 1 2*

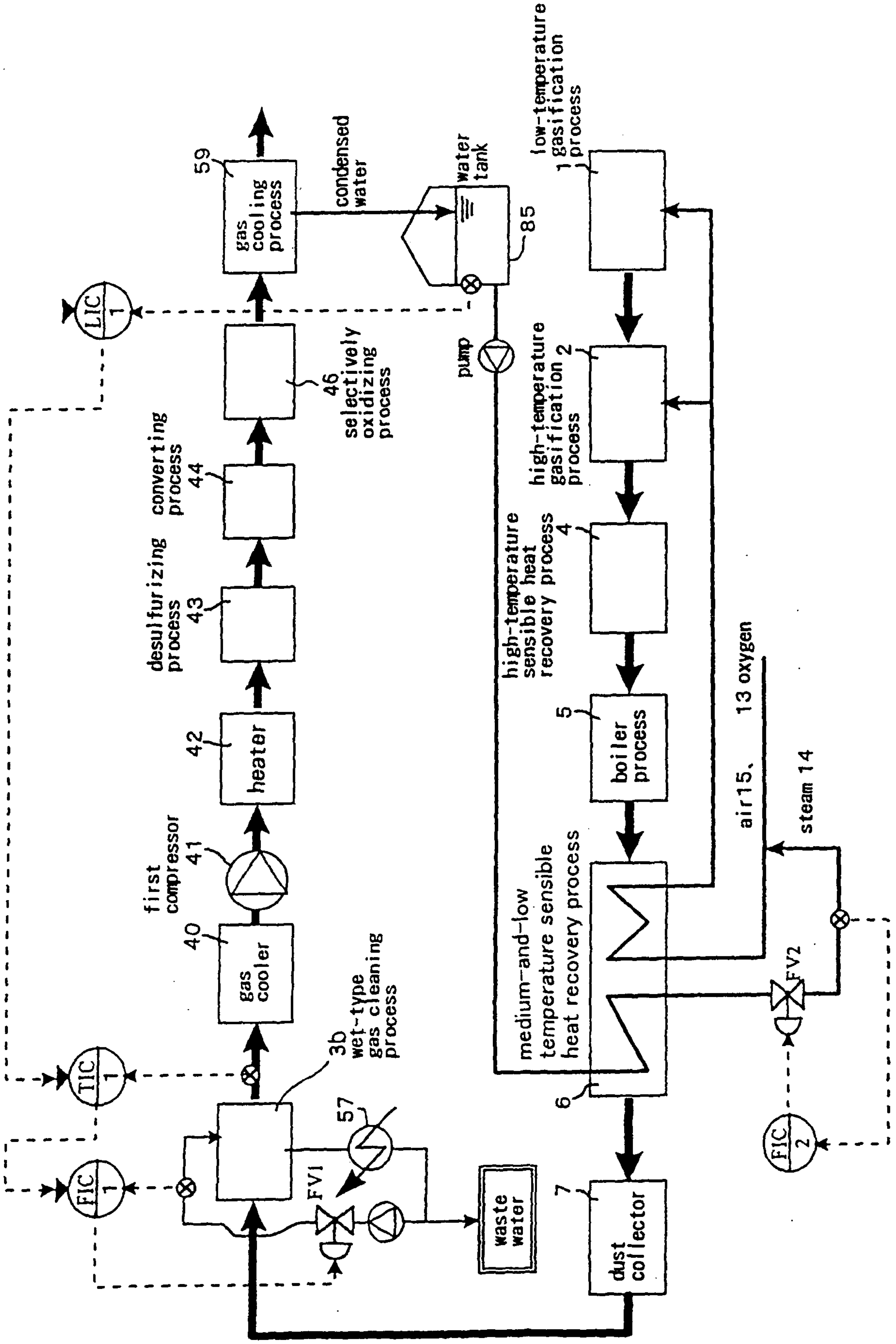
59
gas cooling process
condensed water
water tank
85
low-temperature gasification process
1
LIC 1
46
selectively oxidizing process
pump
high-temperature gasification process
2
converting process
44
desulfurizing process
43
high-temperature sensible heat recovery process
4
13 oxygen
42
heater
5
boiler process
air15.
steam 14
first compressor
41
40
gas cooler
medium-and-low temperature sensible heat recovery process
6
FV2
3b
wet-type gas cleaning process
TIC 1
57
FIC 2
FIC 1
FV1
waste water
7
dust collector

F I G. 1 3

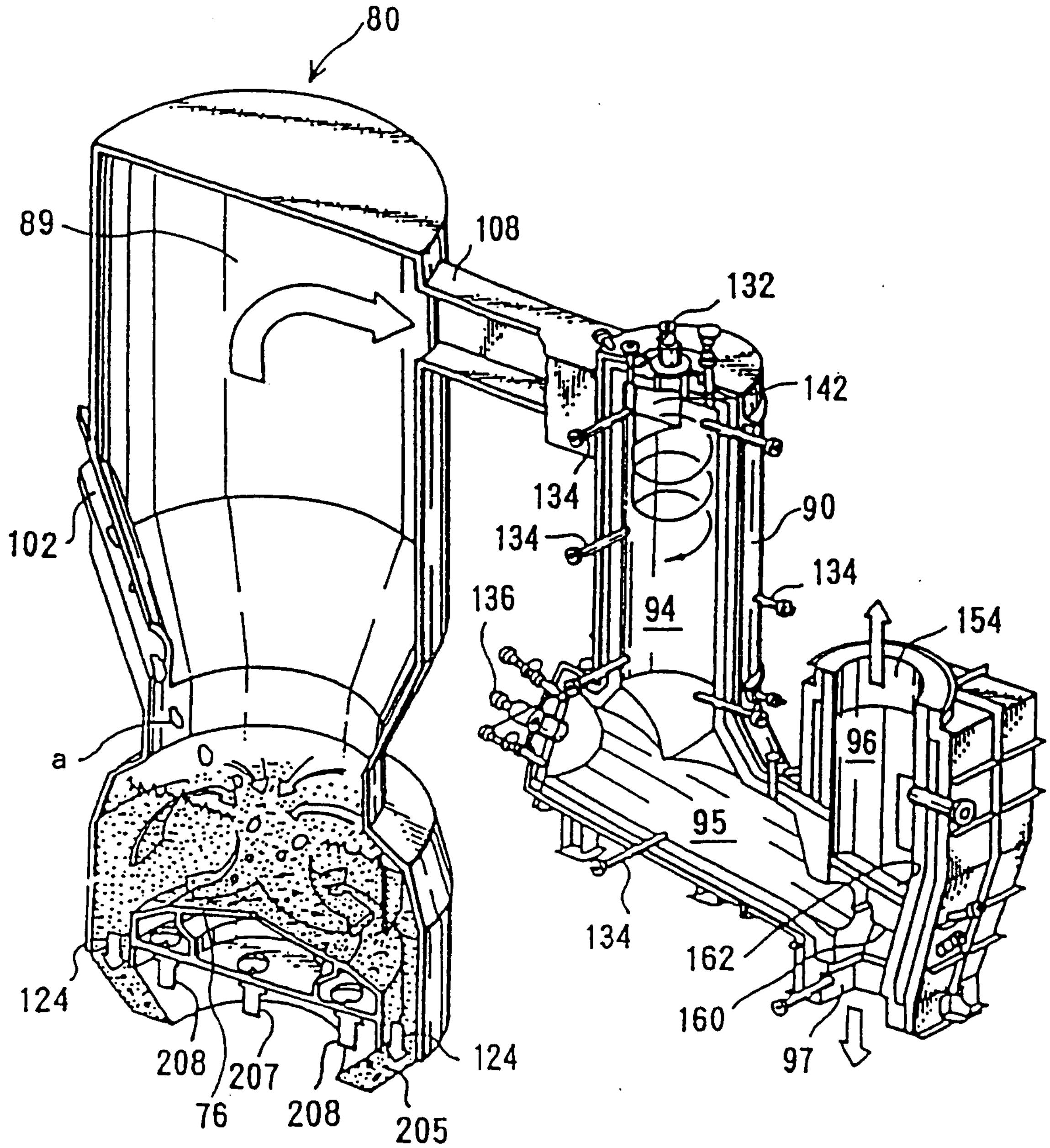
80
89
108
132
142
134
134
90
102
134
136
94
154
96
a
95
134
162
124
160
208
207
124
97
76
208
205

F I G. 1 4

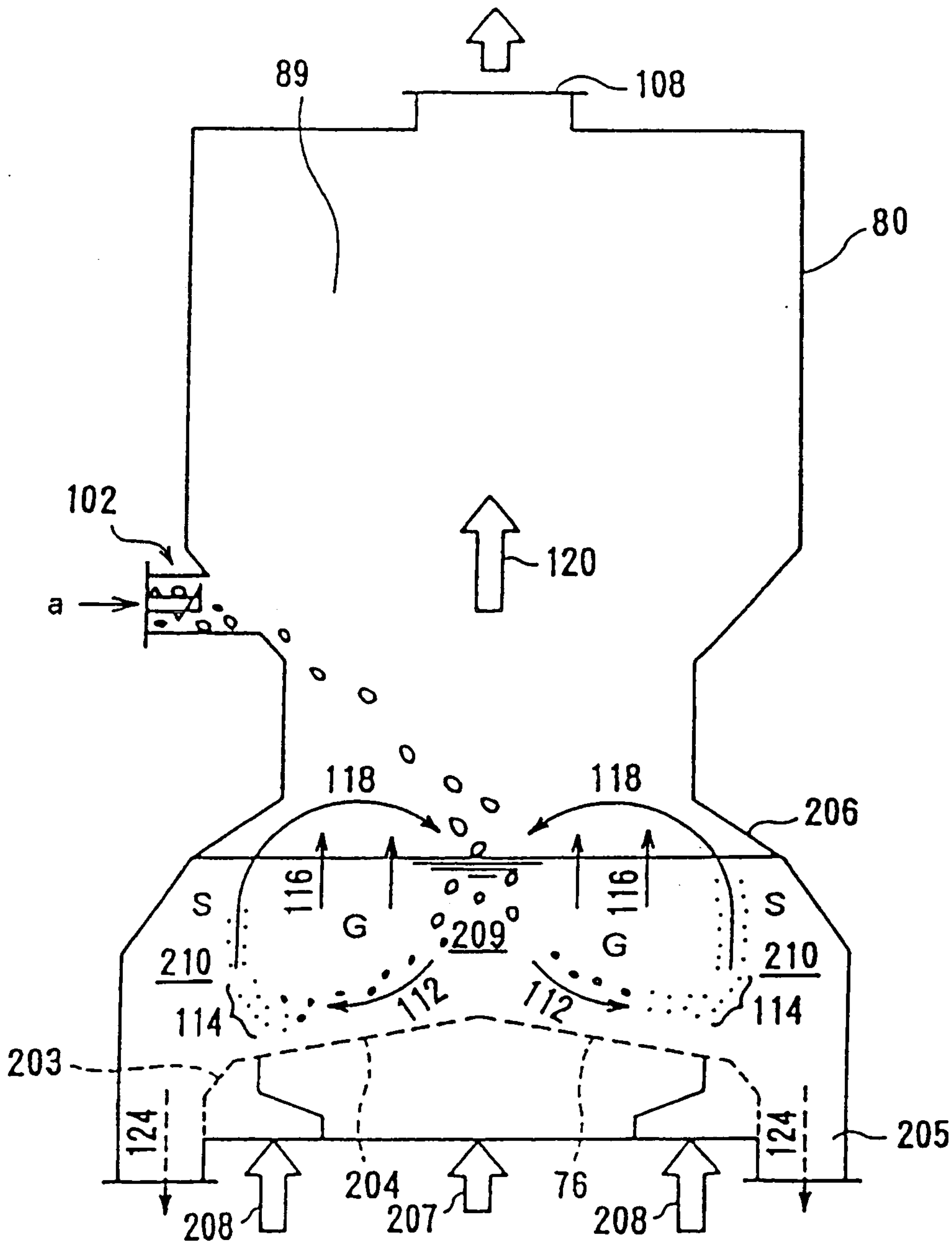
89
108
80
102
a
120
118
118
206
116
116
S
S
G
G
209
210
210
112
112
114
114
203
124
124
205
204
207
76
208
208

FIG. 15

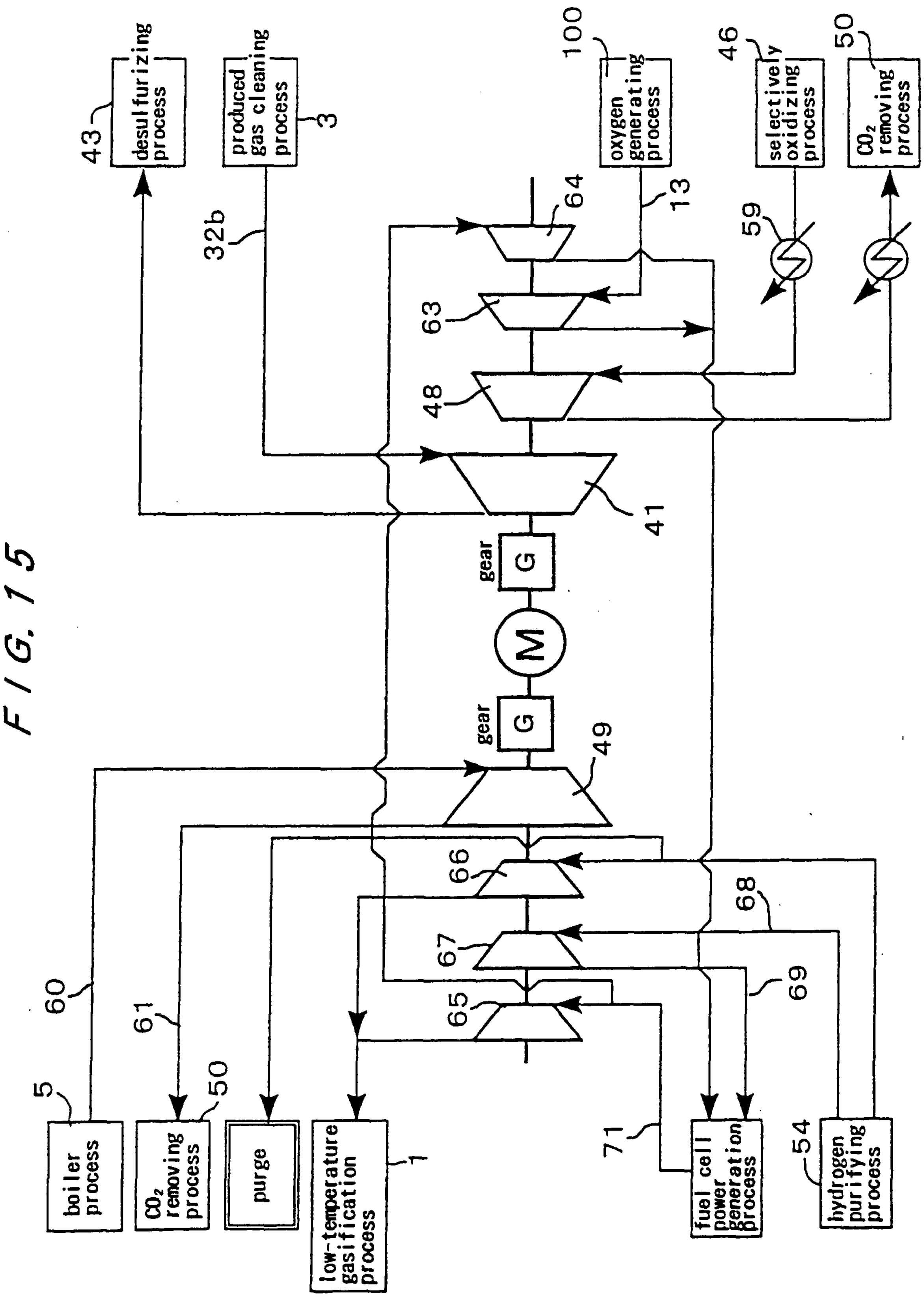

desulfurizing process
43
produced gas cleaning process
3
oxygen generating process
100
selectively oxidizing process
46
$CO_2$ removing process
50
32b
64
13
59
63
48
41
gear
G
M
gear
G
49
60
61
66
68
67
69
65
5
boiler process
$CO_2$ removing process
50
purge
low-temperature gasification process
1
71
fuel cell power generation process
54
hydrogen purifying process

FIG. 16

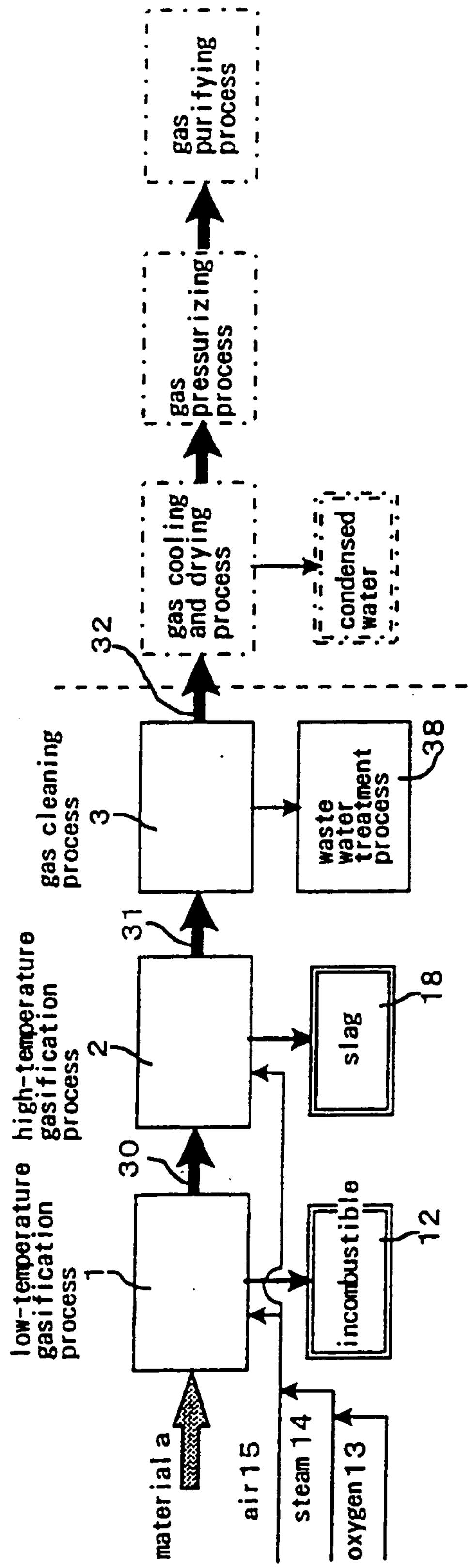
material a
air15
steam 14
oxygen13
low-temperature gasification process
1
incombustible
12
30
high-temperature gasification process
2
slag
18
31
gas cleaning process
3
waste water treatment process
38
32
gas cooling and drying process
condensed water
gas pressurizing process
gas purifying process

European Patent Office

# EUROPEAN SEARCH REPORT

Application Number
EP 04 01 4396

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | US 3 639 111 A (BRINK DAVID L ET AL) 1 February 1972 (1972-02-01) * claims 1,3,6 * * column 4, line 37 - line 63 * | 1,2 | C10J3/00 C10J3/58 H01M8/06 |
| A | EP 0 803 562 A (EBARA CORP ;UBE INDUSTRIES (JP)) 29 October 1997 (1997-10-29) * claims 1,5,6 * | 1,16 | |
| A | US 4 613 344 A (HENRICH GUENTER ET AL) 23 September 1986 (1986-09-23) * claims 1,2 * * column 4, line 18 - column 5, line 32 * | 4-6,17 | |
| P,A | US 5 980 858 A (FUJIMURA HIROYUKI ET AL) 9 November 1999 (1999-11-09) * claims 1,2 * * figures 1-6 * | 1,2,16, 19 | |
| A | US 4 365 006 A (BAKER BERNARD S) 21 December 1982 (1982-12-21) | | TECHNICAL FIELDS SEARCHED (Int.Cl.7) |
| A | US 4 682 985 A (KOHL ARTHUR L) 28 July 1987 (1987-07-28) | | C10J H01M C10K |
| A | DATABASE WPI Section Ch, Week 199407 Derwent Publications Ltd., London, GB; Class A35, AN 1994-054114 XP002156198 & JP 06 009967 A (MITSUBISHI HEAVY IND CO LTD) 18 January 1994 (1994-01-18) * abstract * | | |

The present search report has been drawn up for all claims

| Place of search | Date of completion of the search | Examiner |
|---|---|---|
| The Hague | 9 September 2004 | De Herdt, O |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 04 01 4396

This annex lists the patent family members relating to the patent documents cited in the above-mentioned European search report.
The members are as contained in the European Patent Office EDP file on
The European Patent Office is in no way liable for these particulars which are merely given for the purpose of information.

09-09-2004

| Patent document cited in search report | Publication date | Patent family member(s) | Publication date |
|---|---|---|---|
| US 3639111 A | 01-02-1972 | NONE | |
| EP 0803562 A | 29-10-1997 | DE 69624095 D1 | 07-11-2002 |
| | | DE 69624095 T2 | 25-09-2003 |
| | | EP 0803562 A1 | 29-10-1997 |
| | | ES 2185737 T3 | 01-05-2003 |
| | | ID 16647 A | 23-10-1997 |
| | | JP 10067992 A | 10-03-1998 |
| | | US 6063355 A | 16-05-2000 |
| | | US 6455011 B1 | 24-09-2002 |
| | | US 5900224 A | 04-05-1999 |
| | | US 5980858 A | 09-11-1999 |
| | | JP 3415748 B2 | 09-06-2003 |
| | | JP 10236801 A | 08-09-1998 |
| US 4613344 A | 23-09-1986 | DE 3340204 A1 | 15-05-1985 |
| | | AU 3443184 A | 16-05-1985 |
| | | BR 8405647 A | 10-09-1985 |
| | | FR 2554457 A1 | 10-05-1985 |
| | | GB 2150856 A ,B | 10-07-1985 |
| | | JP 60115688 A | 22-06-1985 |
| | | ZA 8408652 A | 26-06-1985 |
| US 5980858 A | 09-11-1999 | JP 10067992 A | 10-03-1998 |
| | | US 6455011 B1 | 24-09-2002 |
| | | DE 69624095 D1 | 07-11-2002 |
| | | DE 69624095 T2 | 25-09-2003 |
| | | EP 0803562 A1 | 29-10-1997 |
| | | ES 2185737 T3 | 01-05-2003 |
| | | ID 16647 A | 23-10-1997 |
| | | US 6063355 A | 16-05-2000 |
| | | US 5900224 A | 04-05-1999 |
| | | JP 3415748 B2 | 09-06-2003 |
| | | JP 10236801 A | 08-09-1998 |
| | | CN 1253577 A ,C | 17-05-2000 |
| | | EP 0979262 A1 | 16-02-2000 |
| | | WO 9847985 A1 | 29-10-1998 |
| US 4365006 A | 21-12-1982 | BR 8201717 A | 22-02-1983 |
| | | CA 1162234 A1 | 14-02-1984 |
| | | EP 0061727 A2 | 06-10-1982 |
| | | JP 57170462 A | 20-10-1982 |
| US 4682985 A | 28-07-1987 | CA 1274355 A1 | 25-09-1990 |
| | | FI 863287 A ,B, | 24-03-1987 |
| | | JP 8019632 B | 28-02-1996 |

EPO FORM P0459

For more details about this annex : see Official Journal of the European Patent Office, No. 12/82

## ANNEX TO THE EUROPEAN SEARCH REPORT ON EUROPEAN PATENT APPLICATION NO. EP 04 01 4396

This annex lists the patent family members relating to the patent documents cited in the above-mentioned European search report.
The members are as contained in the European Patent Office EDP file on
The European Patent Office is in no way liable for these particulars which are merely given for the purpose of information.

09-09-2004

| Patent document cited in search report | | Publication date | Patent family member(s) | | Publication date |
|---|---|---|---|---|---|
| US 4682985 | A | | JP | 62069894 A | 31-03-1987 |
| | | | NO | 863768 A ,B, | 24-03-1987 |
| | | | SE | 466920 B | 27-04-1992 |
| | | | SE | 8603958 A | 24-03-1987 |
| | | | DE | 3464884 D1 | 27-08-1987 |
| | | | EP | 0127936 A1 | 12-12-1984 |
| | | | NO | 841617 A ,B, | 22-10-1984 |
| | | | US | 4538663 A | 03-09-1985 |
| JP 6009967 | A | 18-01-1994 | JP | 3009541 B2 | 14-02-2000 |

EPO FORM P0459

For more details about this annex : see Official Journal of the European Patent Office, No. 12/82